(19) Europäisches Patentamt
European Patent Office
Office européen des brevets

(11) **EP 2 447 908 A2**

(12) **EUROPEAN PATENT APPLICATION**
published in accordance with Art. 153(4) EPC

(43) Date of publication:
02.05.2012 Bulletin 2012/18

(51) Int Cl.:
**G06Q 50/00** (2012.01)

(21) Application number: 10792357.5

(22) Date of filing: 25.06.2010

(86) International application number:
**PCT/KR2010/004135**

(87) International publication number:
**WO 2010/151075 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: 25.06.2009 KR 20090057314
02.07.2009 KR 20090060409
23.10.2009 KR 20090101175
28.10.2009 US 255636 P
30.10.2009 KR 20090104487

(71) Applicant: **Samsung Electronics Co., Ltd.**
**Suwon-si, Gyeonggi-do 443-742 (KR)**

(72) Inventors:
• **HAN, Jae Joon**
**Yongin-si**
**Gyeonggi-do 446-712 (KR)**
• **HAN, Seung Ju**
**Yongin-si**
**Gyeonggi-do 446-712 (KR)**
• **LEE, Hyun Jeong**
**Yongin-si**
**Gyeonggi-do 446-712 (KR)**
• **BANG, Won Chul**
**Yongin-si**
**Gyeonggi-do 446-712 (KR)**
• **AHN, Jeong Hwan**
**Yongin-si**
**Gyeonggi-do 446-712 (KR)**
• **KIM, Do Kyoon**
**Yongin-si**
**Gyeonggi-do 446-712 (KR)**

(74) Representative: **D'Halleweyn, Nele Veerle Trees**
**Gertrudis et al**
**Arnold & Siedsma**
**Sweelinckplein 1**
**2517 GK The Hague (NL)**

(54) **IMAGING DEVICE AND COMPUTER READING AND RECORDING MEDIUM**

(57) Provided are a display device and a non-transitory computer-readable recording medium. By comparing a priority of an animation clip corresponding to a predetermined part of an avatar of a virtual world with a priority of motion data and by determining data corresponding to the predetermined part of the avatar, a motion of the avatar in which motion data sensing a motion of a user of a real world is associated with the animation clip may be generated.

FIG. 1

**Description**

BACKGROUND

1. Field

One or more embodiments relate to a display device and a non-transitory computer-readable recording medium, and more particularly, to a display device and a non-transitory computer-readable recording medium that may generate a motion of an avatar of a virtual world.

2. Description of the Related Art

Recently, interest in a sensible-type game is increasing. In "E3 2009" Press conference, Microsoft company has published "Project Natal" that enables interaction with a virtual world without using a separate controller by combining Xbox 360 with a separate sensor device configured as a microphone array and a depth/color camera, and thereby providing technology of capturing the whole body motion of a user, recognizing a face of the user, and recognizing a sound of the user. Also, Sony company has published a sensible game motion controller "Wand" capable of interacting with a virtual world by applying position/direction sensing technology in which a color camera, a marker, and an ultrasonic sensor are combined, to Play Station 3 that is a game consol of Sony company, and thereby using a motion locus of a controller as an input.

The interaction between a real world and a virtual world has two orientations. First is to adapt data information obtained from a sensor of the real world to the virtual world, and second is to adapt data information from the virtual world to the real world through an actuator.

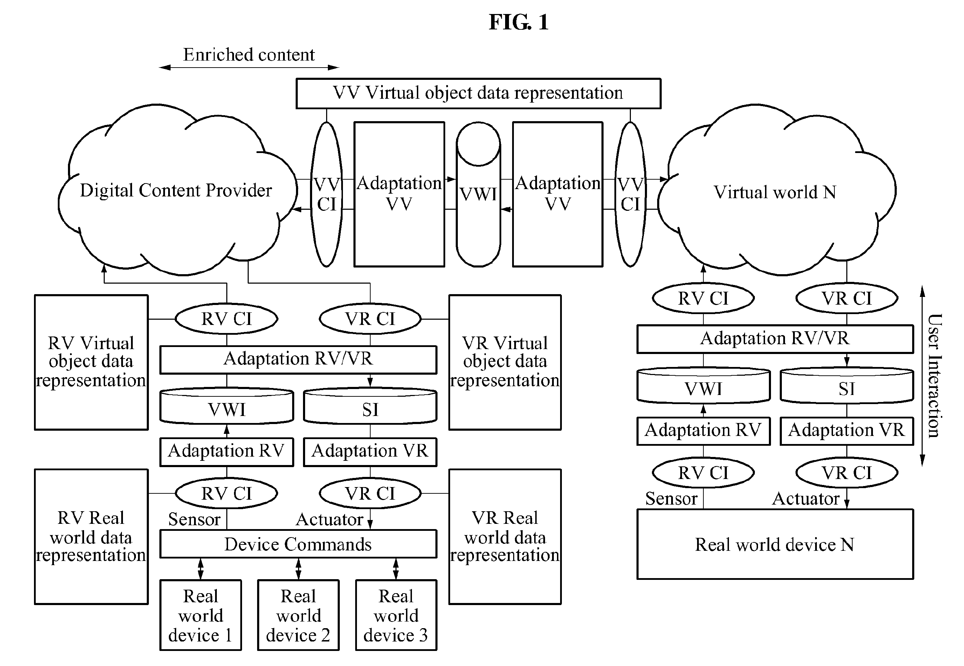

FIG. 1 illustrates a system structure of an MPEG-V standard.

Document 10618 discloses control information for adaptation VR that may adapt the virtual world to the real world. Control information to an opposite direction, for example, control information for adaptation RV that may adapt the real world to the virtual world is not proposed. The control information for the adaptation RV may include all of elements that are controllable in the virtual world.

Accordingly, there is a desire for a display device and a non-transitory computer-readable recording medium that may generate a motion of an avatar of a virtual world using an animation clip and data that is obtained from a sensor of a real world in order to configure the interaction between the real world and the virtual world.

SUMMARY

The foregoing and/or other aspects are achieved by providing a display device including a storage unit to store an animation clip, animation control information, and control control information, the animation control information including information indicating a part of an avatar the animation clip corresponds to and a priority, and the control control information including information indicating a part of an avatar motion data corresponds to and a priority, and the motion data being generated by processing a value received from a motion sensor; and a processing unit to compare a priority of animation control information corresponding to a first part of the avatar with a priority of control control information corresponding to the first part of the avatar, and to determine data to be applicable to the first part of the avatar.

The foregoing and/or other aspects are achieved by providing a non-transitory computer-readable recording medium storing a program implemented in a computer system comprising a processor and a memory, the non-transitory computer-readable recording medium including a first set of instructions to store animation control information and control control information, and a second set of instructions to associate an animation clip and motion data generated from a value received from a motion sensor, based on the animation control information corresponding to each part of an avatar and the control control information. The animation control information may include information associated with a corresponding animation clip, and an identifier indicating the corresponding animation clip corresponds to one of a facial expression, a head, an upper body, a middle body, and a lower body of an avatar, and the control control information may include an identifier indicating real-time motion data corresponds to one of the facial expression, the head, the upper body, the middle body, and the lower body of an avatar.

BRIEF DESCRIPTION OF THE DRAWINGS

FIG. 1 illustrates a system structure of an MPEG-V standard.
FIG. 2 illustrates a structure of a system exchanging information and data between a real world and a virtual world according to an embodiment.

FIG. 3 through FIG. 7 illustrate an avatar control command according to an embodiment.

FIG. 8 illustrates a structure of an appearance control type (AppearanceControlType) according to an embodiment.

FIG. 9 illustrates a structure of a communication skills control type (CommunicationSkillsControlType) according to an embodiment.

FIG. 10 illustrates a structure of a personality control type (PersonalityControlType) according to an embodiment.

FIG. 11 illustrates a structure of an animation control type (AnimationControlType) according to an embodiment.

FIG. 12 illustrates a structure of a control control type (ControlControlType) according to an embodiment.

FIG. 13 illustrates a configuration of a display device according to an embodiment.

FIG. 14 illustrates a state where an avatar of a virtual world is divided into a facial expression part, a head part, an upper body part, a middle body part, and a lower body part according to an embodiment.

FIG. 15 illustrates a database with respect to an animation clip according to an embodiment.

FIG. 16 illustrates a database with respect to motion data according to an embodiment.

FIG. 17 illustrates an operation of determining motion object data to be applied to an arbitrary part of an avatar by comparing priorities according to an embodiment.

FIG. 18 illustrates a method of determining motion object data to be applied to each part of an avatar according to an embodiment.

FIG. 19 illustrates an operation of associating corresponding motion object data with each part of an avatar according to an embodiment.

FIG. 20 illustrates an operation of associating corresponding motion object data with each part of an avatar according to an embodiment.

FIG. 21 illustrates feature points for sensing a face of a user of a real world by a display device according to an embodiment.

FIG. 22 illustrates feature points for sensing a face of a user of a real world by a display device according to another embodiment.

FIG. 23 illustrates a face features control type (FaceFeaturesControlType) according to an embodiment.

FIG. 24 illustrates head outline 1 according to an embodiment.

FIG. 25 illustrates left eye outline 1 and left eye outline 2 according to an embodiment.

FIG. 26 illustrates right eye outline 1 and right eye outline 2 according to an embodiment.

FIG. 27 illustrates a left eyebrow outline according to an embodiment.

FIG. 28 illustrates a right eyebrow outline according to an embodiment.

FIG. 29 illustrates a left ear outline according to an embodiment.

FIG. 30 illustrates a right ear outline according to an embodiment.

FIG. 31 illustrates noise outline 1 and noise outline 2 according to an embodiment.

FIG. 32 illustrates a mouth lips outline according to an embodiment.

FIG. 33 illustrates head outline 2 according to an embodiment.

FIG. 34 illustrates an upper lip outline according to an embodiment.

FIG. 35 illustrates a lower lip outline according to an embodiment.

FIG. 36 illustrates a face point according to an embodiment.

FIG. 37 illustrates an outline diagram according to an embodiment.

FIG. 38 illustrates a head outline 2 type (HeadOutline2Type) according to an embodiment.

FIG. 39 illustrates an eye outline 2 type (EyeOutline2Type) according to an embodiment.

FIG. 40 illustrates a nose outline 2 type (NoseOutline2Type) according to an embodiment.

FIG. 41 illustrates an upper lip outline 2 type (UpperLipOutline2Type) according to an embodiment.

FIG. 42 illustrates a lower lip outline 2 type (LowerLipOutline2Type) according to an embodiment.

FIG. 43 illustrates a face point set type (FacePointSetType) according to an embodiment.

DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

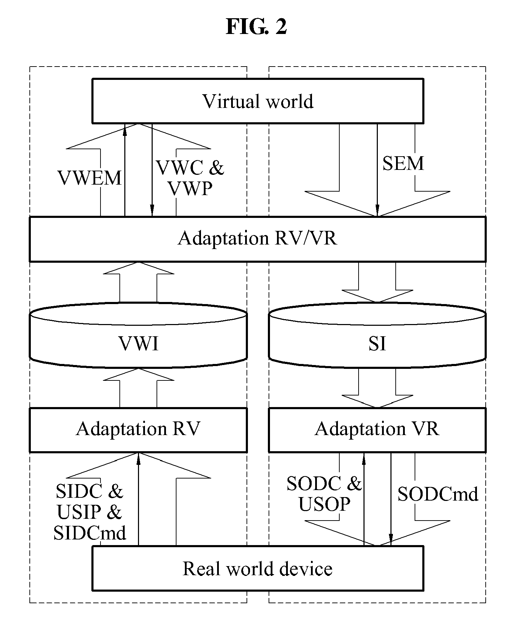

FIG. 2 illustrates a structure of a system of exchanging information and data between the virtual world and the real world according to an embodiment.

Referring to FIG. 2, when an intent of a user in the real world is input using a real world device (e.g., motion sensor), a sensor signal including control information (hereinafter, referred to as 'CI') associated with the user intent of the real world may be transmitted to a virtual world processing device.

The CI may be commands based on values input through the real world device or information relating to the commands. The CI may include sensory input device capabilities (SIDC), user sensory input preferences (USIP), and sensory input device commands (SDICmd).

An adaptation real world to virtual world (hereinafter, referred to as 'adaptation RV) may be implemented by a real world to virtual world engine (hereinafter, referred to as 'RV engine'). The adaptation RV may convert real world information input using the real world device to information to be applicable in the virtual world, using the CI about motion, status, intent, feature, and the like of the user of the real world included in the sensor signal. The above described adaptation process may affect virtual world information (hereinafter, referred to as 'VWI').

The VWI may be information associated with the virtual world. For example, the VWI may be information associated with elements constituting the virtual world, such as a virtual object or an avatar. A change with respect to the VWI may be performed in the RV engine through commands of a virtual world effect metadata (VWEM) type, a virtual world preference (VWP) type, and a virtual world capability type.

Table 1 describes configurations described in FIG. 2.

[Table 1]

| SIDC | Sensory input device capabilities | VWI | Virtual world information |
|------|-----------------------------------|-----|---------------------------|
| USIP | User sensory input preferences | SODC | Sensory output device capabilities |
| SIDCmd | Sensory input device commands | USOP | User sensory output preferences |
| VWC | Virtual world capabilities | SODCmd | Sensory output device commands |
| VWP | Virtual world preferences | SEM | Sensory effect metadata |
| VWEM | Virtual world effect metadata | SI | Sensory information |

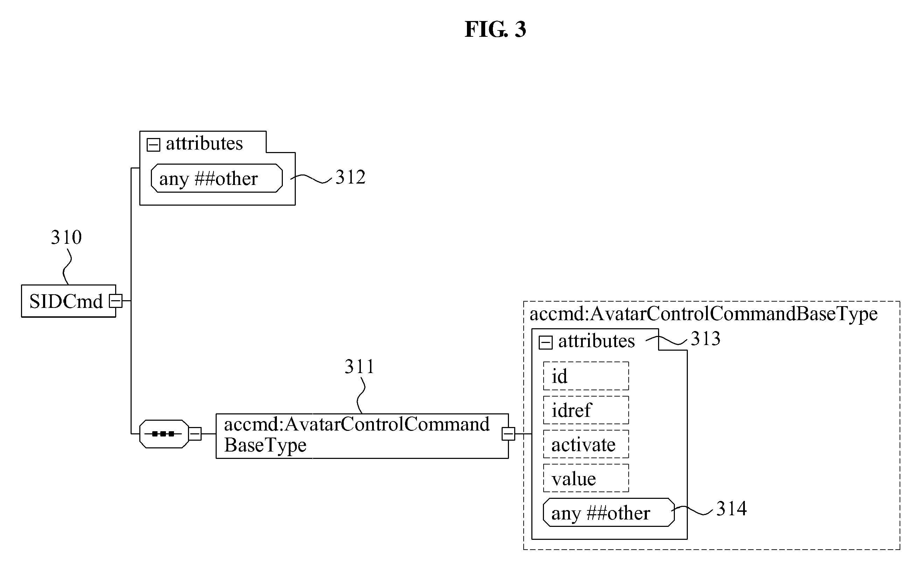

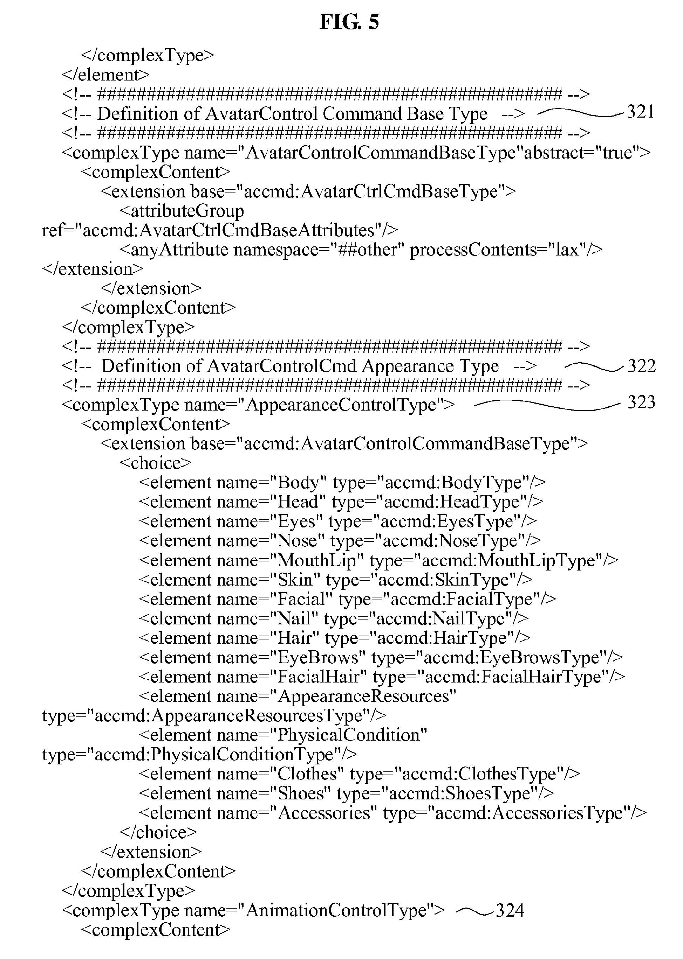

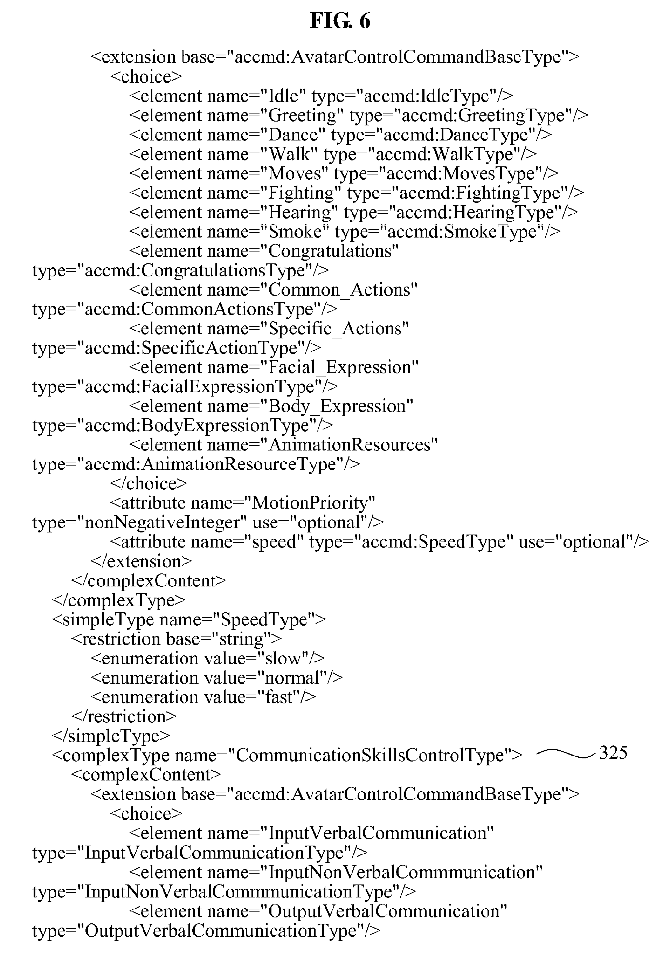

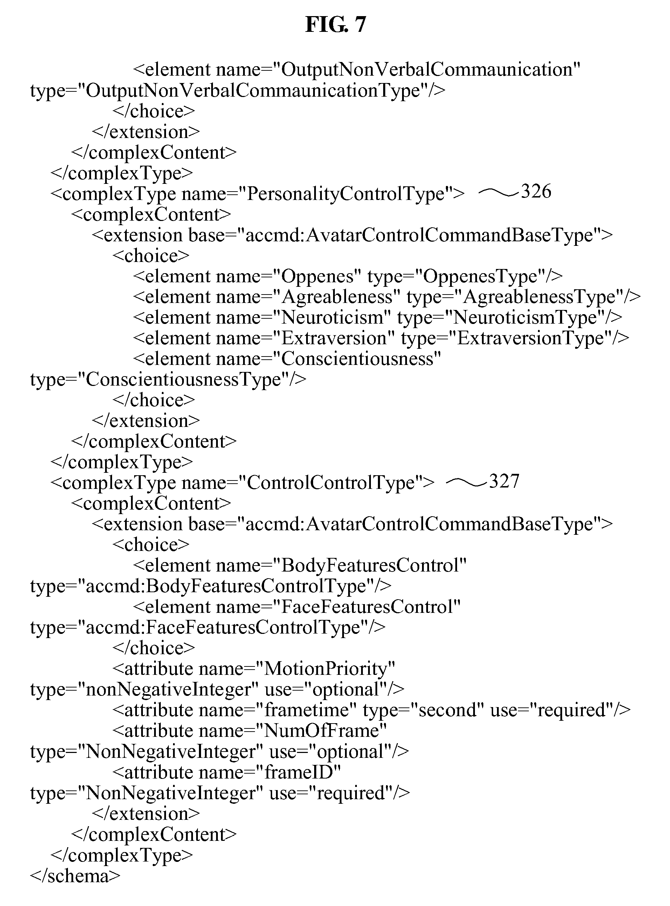

FIG. 3 to FIG. 7 are diagrams illustrating avatar control commands 310 according to an embodiment.

Referring to FIG. 3, the avatar control commands 310 may include an avatar control command base type 311 and any attributes 312.

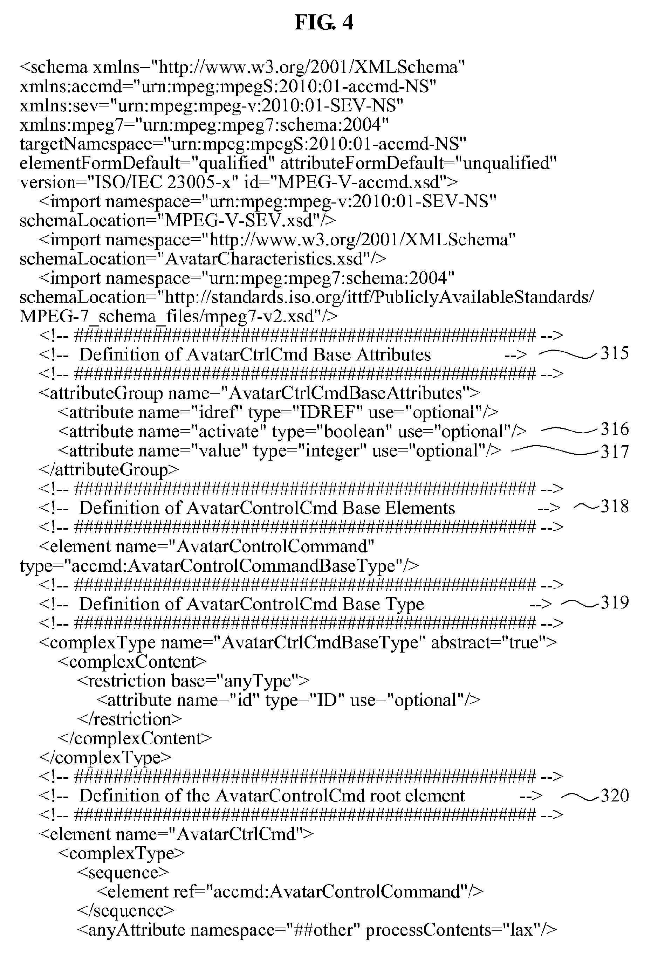

Also, referring to FIG. 4 to FIG. 7, the avatar control commands are displayed using extensible Markup Language (XML). However, a program source displayed in FIG. 4 to FIG. 7 may be merely an example, and the present embodiment is not limited thereto.

A section 318 may signify a definition of a base element of the avatar control commands 310. The avatar control commands 310 may semantically signify commands for controlling an avatar.

A section 320 may signify a definition of a root element of the avatar control commands 310. The avatar control commands 310 may indicate a function of the root element for metadata.

Sections 319 and 321 may signify a definition of the avatar control command base type 311. The avatar control command base type 311 may extend an avatar control command base type (AvatarCtrlCmdBasetype), and provide a base abstract type for a subset of types defined as part of the avatar control commands metadata types.

The any attributes 312 may be an additional avatar control command.

According to an embodiment, the avatar control command base type 311 may include avatar control command base attributes 313 and any attributes 314.

A section 315 may signify a definition of the avatar control command base attributes 313. The avatar control command base attributes 313 may be instructions to display a group of attribute for the commands.

The avatar control command base attributes 313 may include 'id', 'idref', 'activate', and 'value'.

'id' may be identifier (ID) information for identifying individual identities of the avatar control command base type 311.

'idref may refer to elements that have an instantiated attribute of type id. 'idref may be additional information with respect to 'id' for identifying the individual identities of the avatar control command base type 311.

'activate' may signify whether an effect shall be activated. 'true' may indicate that the effect is activated, and 'false' may indicate that the effect is not activated. As for a section 316, 'activate' may have data of a "boolean" type, and may be optionally used.

'value' may describe an intensity of the effect in percentage according to a max scale defined within a semantic definition of individual effects. As for a section 317, 'value' may have data of "integer" type, and may be optionally used.

The any attributes 314 may be instructions to provide an extension mechanism for including attributes from another namespace being different from target namespace. The included attributes may be XML streaming commands defined in ISO/IEC 21000-7 for the purpose of identifying process units and associating time information of the process units. For example, 'si:pts' may indicate a point in which the associated information is used in an application for processing.

A section 322 may indicate a definition of an avatar control command appearance type.

According to an embodiment, the avatar control command appearance type may include an appearance control type, an animation control type, a communication skill control type, a personality control type, and a control control type.

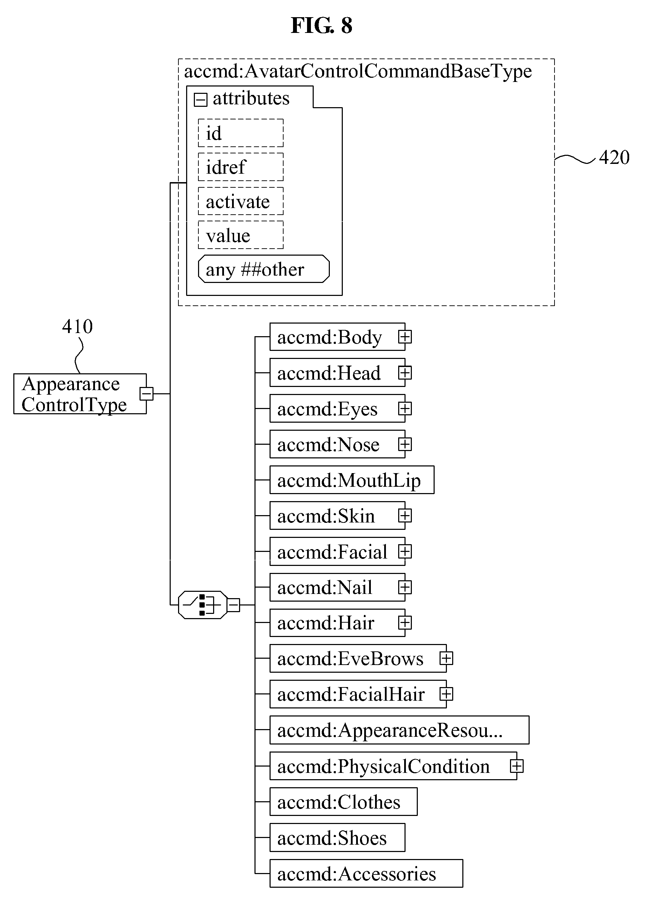

A section 323 may indicate an element of the appearance control type. The appearance control type may be a tool for expressing appearance control commands. Hereinafter, a structure of the appearance control type will be described in detail with reference to FIG. 8.

FIG. 8 illustrates a structure of an appearance control type 410 according to an embodiment.

Referring to FIG. 8, the appearance control type 410 may include an avatar control command base type 420 and elements. The avatar control command base type 420 was described in detail in the above, and thus descriptions thereof will be omitted.

According to an embodiment, the elements of the appearance control type 410 may include body, head, eyes, nose, mouth lips, skin, face, nail, hair, eyebrows, facial hair, appearance resources, physical condition, clothes, shoes, and accessories.

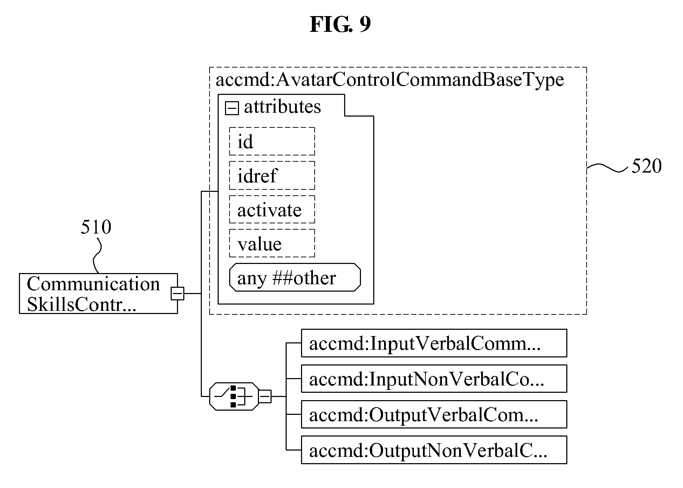

Referring again to FIG. 3 to FIG. 7, a section 325 may indicate an element of the communication skill control type. The communication skill control type may be a tool for expressing animation control commands. Hereinafter, a structure of the communication skill control type will be described in detail with reference to FIG. 9.

FIG. 9 illustrates a structure of a communication skill control type 510 according to an embodiment.

Referring to FIG. 9, the communication skill control type 510 may include an avatar control command base type 520 and elements.

According to an embodiment, the elements of the communication skill control type 510 may include input verbal communication, input nonverbal communication, output verbal communication, and output nonverbal communication.

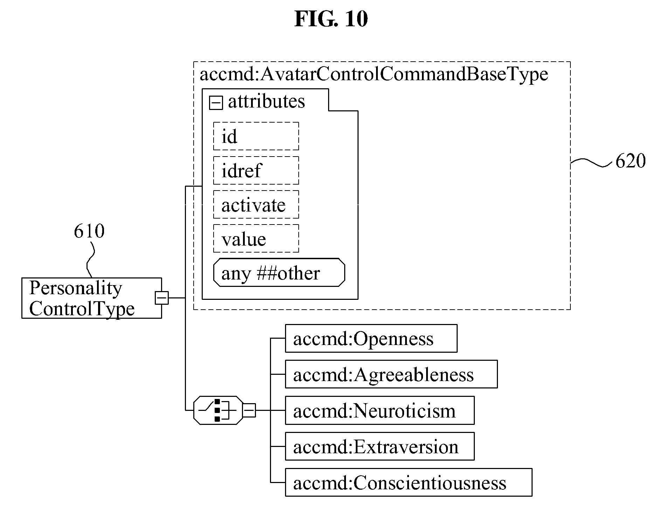

Referring again to FIG. 3 to FIG. 7, a section 326 may indicate an element of the personality control type. The personality control type may be a tool for expressing animation control commands. Hereinafter, a structure of the personality control type will be described in detail with reference to FIG. 10.

FIG. 10 illustrates a structure of a personality control type 610 according to an embodiment.

Referring to FIG. 10, the personality control type 610 may include an avatar control command base type 620 and elements.

According to an embodiment, the elements of the personality control type 610 may include openness, agreeableness, neuroticism, extraversion, and conscientiousness.

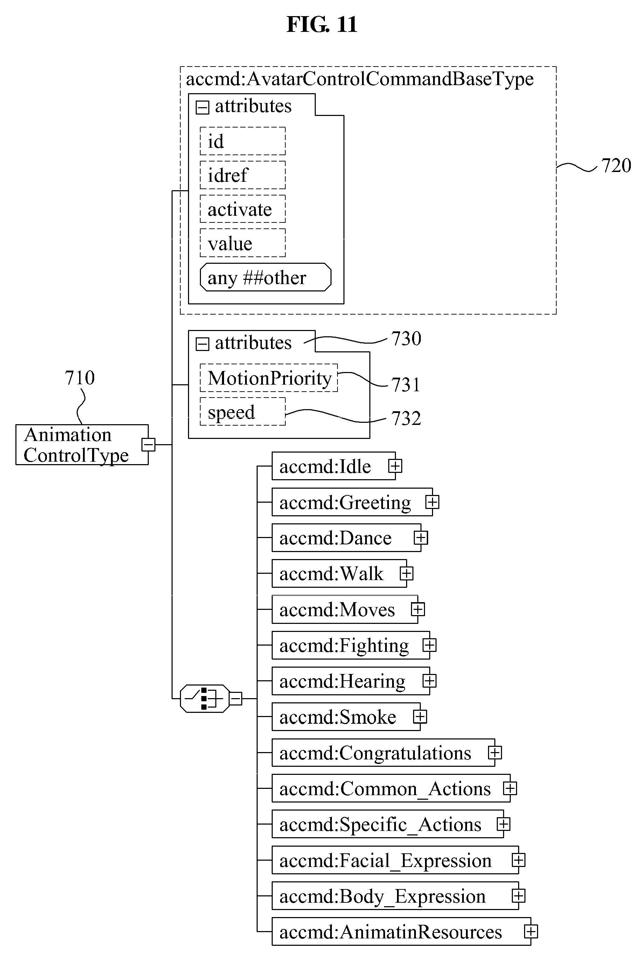

Referring again to FIG. 3 to FIG. 7, a section 324 may indicate an element of the animation control type. The animation control type may be a tool for expressing animation control commands. Hereinafter, a structure of the animation control type will be described in detail with reference to FIG. 11.

FIG. 11 illustrates a structure of an animation control type 710 according to an embodiment.

Referring to FIG. 11, the animation control type 710 may include an avatar control command base type 720, any attributes 730, and elements.

According to an embodiment, the any attributes 730 may include a motion priority 731 and a speed 732.

The motion priority 731 may determine a priority when generating motions of an avatar by mixing animation and body and/or facial feature control.

The speed 732 may adjust a speed of an animation. For example, in a case of an animation concerning a walking motion, the walking motion may be classified into a slowly walking motion, a moderately waling motion, and a quickly walking motion according to a walking speed.

The elements of the animation control type 710 may include idle, greeting, dancing, walking, moving, fighting, hearing, smoking, congratulations, common actions, specific actions, facial expression, body expression, and animation resources.

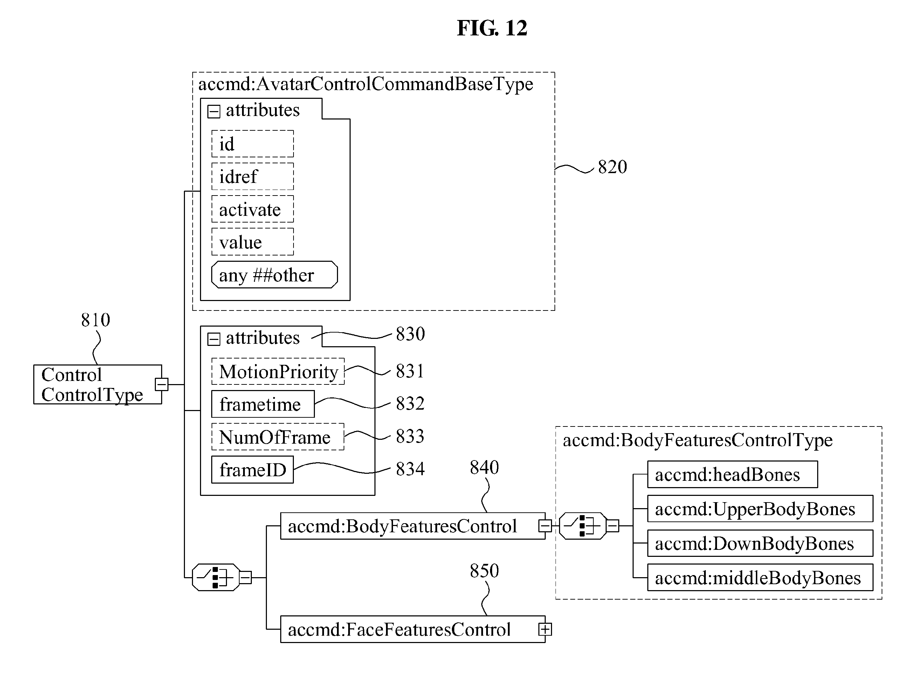

Referring again to FIG. 3 to FIG. 7, a section 327 may indicate an element of the control control type. The control control type may be a tool for expressing control feature control commands. Hereinafter, a structure of the control control type will be described in detail with reference to FIG. 12.

FIG. 12 illustrates a structure of a control control type 810 according to an embodiment.

Referring to FIG. 12, the control control type 810 may include an avatar control command base type 820, any attributes 830, and elements.

According to an embodiment, the any attributes 830 may include a motion priority 831, a frame time 832, a number of frames 833, and a frame ID 834.

The motion priority 831 may determine a priority when generating motions of an avatar by mixing an animation with body and/or facial feature control.

The frame time 832 may define a frame interval of motion control data. For example, the frame interval may be a second unit.

The number of frames 833 may optionally define a total number of frames for motion control.

The frame ID 834 may indicate an order of each frame.

The elements of the control control type 810 may include a body feature control 840 and a face feature control 850.

According to an embodiment, the body feature control 840 may include a body feature control type. Also, the body feature control type may include elements of head bones, upper body bones, lower body bones, and middle body bones.

Motions of an avatar of a virtual world may be associated with the animation control type and the control control type. The animation control type may include information associated with an order of an animation set, and the control control type may include information associated with motion sensing. To control the motions of the avatar of the virtual world, an animation or a motion sensing device may be used. Accordingly, a display device of controlling the motions of the avatar of the virtual world according to an embodiment will be herein described in detail.

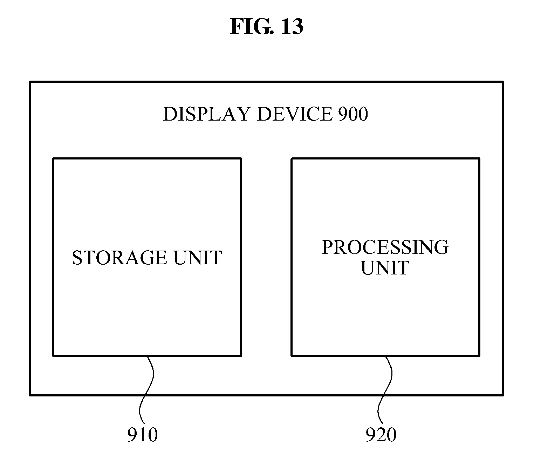

FIG. 13 illustrates a configuration of a display device 900 according to an embodiment.

Referring to FIG. 13, the display device 900 may include a storage unit 910 and a processing unit 920.

The storage unit 910 may include an animation clip, animation control information, and control control information. In this instance, the animation control information may include information indicating a part of an avatar the animation clip corresponds to and a priority. The control control information may include information indicating a part of an avatar motion data corresponds to and a priority. In this instance, the motion data may be generated by processing a value received from a motion senor.

The animation clip may be moving picture data with respect to the motions of the avatar of the virtual world.

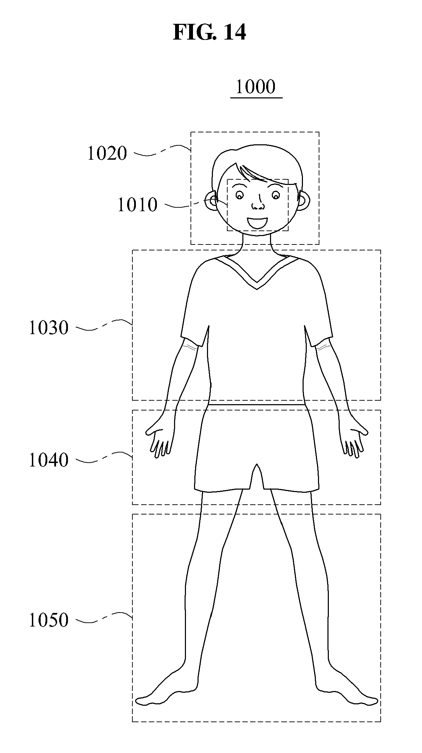

According to an embodiment, the avatar of the virtual world may be divided into each part, and the animation clip and motion data corresponding to each part may be stored. Depending on embodiments, the avatar of the virtual world may be divided into a facial expression, a head, an upper body, a middle body, and a lower body, which will be described in detail with reference to FIG. 14.

FIG. 14 illustrates a state where an avatar 1000 of a virtual world according to an embodiment is divided into a facial expression, a head, an upper body, a middle body, and a lower body.

Referring to FIG. 14, the avatar 1000 may be divided into a facial expression 1010, a head 1020, an upper body 1030, a middle body 1040, and a lower body 1050.

According to an embodiment, the animation clip and the motion data may be data corresponding to any one of the facial expression 1010, the head 1020, the upper body 1030, the middle body 1040, and the lower body 1050.

Referring again to FIG. 13, the animation control information may include the information indicating the part of the avatar the animation clip corresponds to and the priority. The avatar of the virtual world may be at least one, and the animation clip may correspond to at least one avatar based on the animation control information.

Depending on embodiments, the information indicating the part of the avatar the animation clip corresponds to may be information indicating any one of the facial expression, the head, the upper body, the middle body, and the lower body.

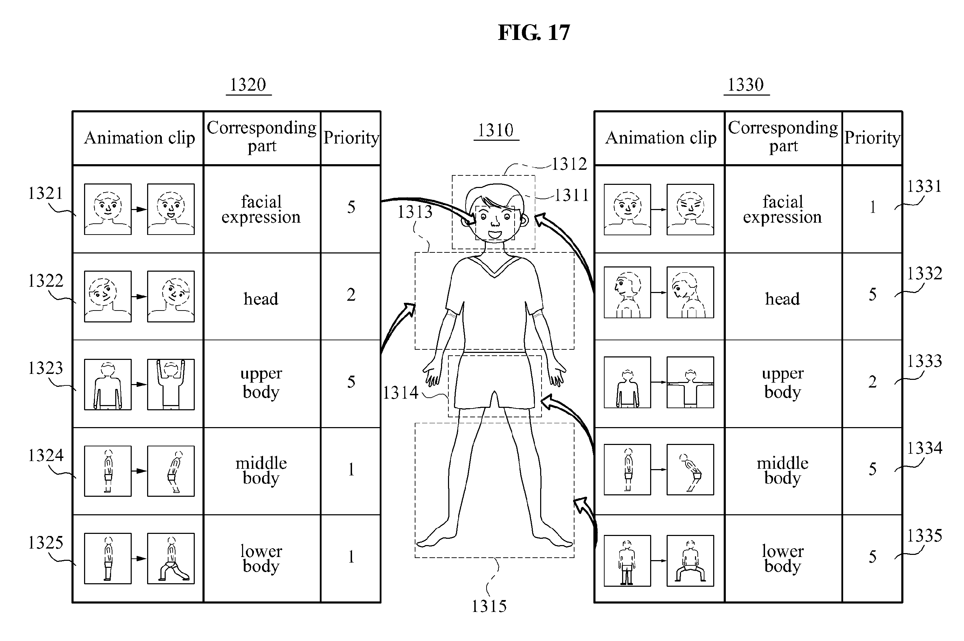

The animation clip corresponding to an arbitrary part of the avatar may have the priority. The priority may be determined by a user in the real world in advance, or may be determined by real-time input. The priority will be further described with reference to FIG. 17.

Depending on embodiments, the animation control information may further include information associated with a speed of the animation clip corresponding to the arbitrary part of the avatar. For example, in a case of data indicating a walking motion as the animation clip corresponding to the lower body of the avatar, the animation clip may be divided into slowly walking motion data, moderately walking motion data, quickly walking motion data, and jumping motion data.

The control control information may include the information indicating the part of the avatar the motion data corresponds to and the priority. In this instance, the motion data may be generated by processing the value received from the motion sensor.

The motion sensor may be a sensor of a real world device for measuring motions, expressions, states, and the like of a user in the real world.

The motion data may be data in which a value obtained by measuring the motions, the expressions, the states, and the like of the user of the real world may be received, and the received value is processed to be applicable in the avatar of the virtual world.

For example, the motion sensor may measure position information with respect to arms and legs of the user of the real world, and may be expressed as $\Theta_{Xreal}$, $\Theta_{Yreal}$, and $\Theta_{Zreal}$, that is, values of angles with a x-axis, a y-axis, and a z-axis, and also expressed as $X_{real}$, $Y_{real}$, and $Z_{real}$, that is, values of the x-axis, the y-axis, and the z-axis. Also, the motion data may be data processed to enable the values about the position information to be applicable in the avatar of the virtual world.

According to an embodiment, the avatar of the virtual world may be divided into each part, and the motion data corresponding to each part may be stored. Depending on embodiments, the motion data may be information indicating any one of the facial expression, the head, the upper body, the middle body, and the lower body of the avatar.

The motion data corresponding to an arbitrary part of the avatar may have the priority. The priority may be determined by the user of the real world in advance, or may be determined by real-time input. The priority of the motion data will be further described with reference to FIG. 17.

The processing unit 920 may compare the priority of the animation control information corresponding to a first part of an avatar and the priority of the control control information corresponding to the first part of the avatar to thereby determine data to be applicable in the first part of the avatar, which will be described in detail with reference to FIG. 17.

According to an aspect, the display device 900 may further include a generator.

The generator may generate a facial expression of the avatar.

Depending on embodiments, a storage unit may store data about a feature point of a face of a user of a real world that is received from a sensor. Here, the generator may generate the facial expression of the avatar based on data that is stored in the storage unit.

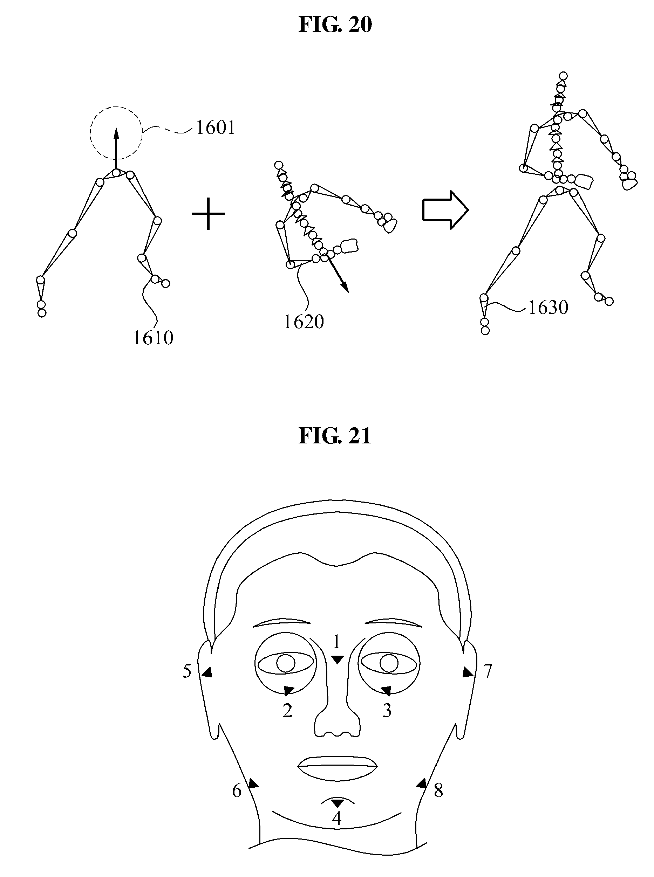

The feature point will be further described with reference to FIG. 21 through FIG. 43.

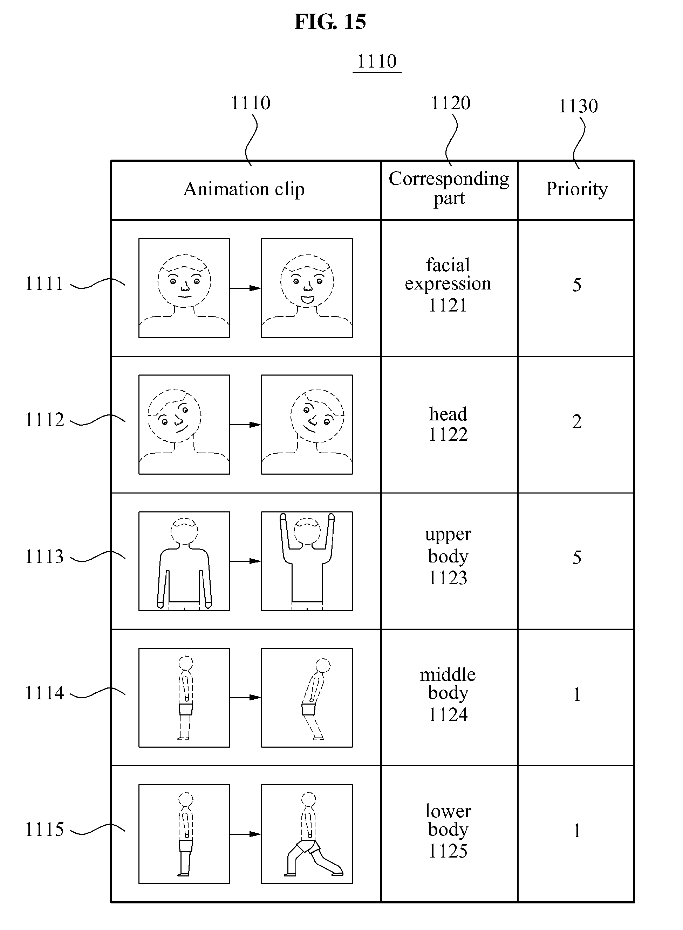

FIG. 15 illustrates a database 1100 with respect to an animation clip according to an embodiment.

Referring to FIG. 15, the database 1100 may be categorized into an animation clip 1110, a corresponding part 1120, and a priority 1130.

The animation clip 1110 may be a category of data with respect to motions of an avatar corresponding to an arbitrary part of an avatar of a virtual world. Depending on embodiments, the animation clip 1110 may be a category with respect to the animation clip corresponding to any one of a facial expression, a head, an upper body, a middle body, and a lower body of an avatar. For example, a first animation clip 1111 may be the animation clip corresponding to the facial expression of the avatar, and may be data concerning a smiling motion. A second animation clip 1112 may be the animation clip corresponding to the head of the avatar, and may be data concerning a motion of shaking the head from side to side. A third animation clip 1113 may be the animation clip corresponding to the upper body of the avatar, and may be data concerning a motion of raising arms up. A fourth animation clip 1114 may be the animation clip corresponding to the middle part of the avatar, and may be data concerning a motion of sticking out a butt. A fifth animation clip 1115 may be the animation clip corresponding to the lower part of the avatar, and may be data concerning a motion of bending one leg and stretching the other leg forward.

The corresponding part 1120 may be a category of data indicating a part of an avatar the animation clip corresponds to. Depending on embodiments, the corresponding part 1120 may be a category of data indicating any one of the facial expression, the head, the upper body, the middle body, and the lower body of the avatar which the animation clip corresponds to. For example, the first animation clip 1111 may be an animation clip corresponding to the facial expression of the avatar, and a first corresponding part 1121 may be expressed as 'facial expression'. The second animation clip 1112 may be an animation clip corresponding to the head of the avatar, and a second corresponding part 1122 may be expressed as 'head'. The third animation clip 1113 may be an animation clip corresponding to the upper body of the avatar, and a third corresponding part 1123 may be expressed as 'upper body'. The fourth animation clip 1114 may be an animation clip corresponding to the middle body of the avatar, and a fourth corresponding part 1124 may be expressed as 'middle body'. The fifth animation clip 1115 may be an animation clip corresponding to the lower body of the avatar, and a fifth corresponding part 1125 may be expressed as 'lower body'.

The priority 1130 may be a category of values with respect to the priority of the animation clip. Depending on embodiments, the priority 1130 may be a category of values with respect to the priority of the animation clip corresponding to any one of the facial expression, the head, the upper body, the middle body, and the lower body of the avatar. For example, the first animation clip 1111 corresponding to the facial expression of the avatar may have a priority value of '5'. The second animation clip 1112 corresponding to the head of the avatar may have a priority value of '2'. The third animation clip 1113 corresponding to the upper body of the avatar may have a priority value of '5'. The fourth animation clip 1114 corresponding to the middle body of the avatar may have a priority value of '1'. The fifth animation clip 1115 corresponding to the lower body of the avatar may have a priority value of '1'. The priority value with respect to the animation clip may be determined by a user in the real world in advance, or may be determined by a real-time input.

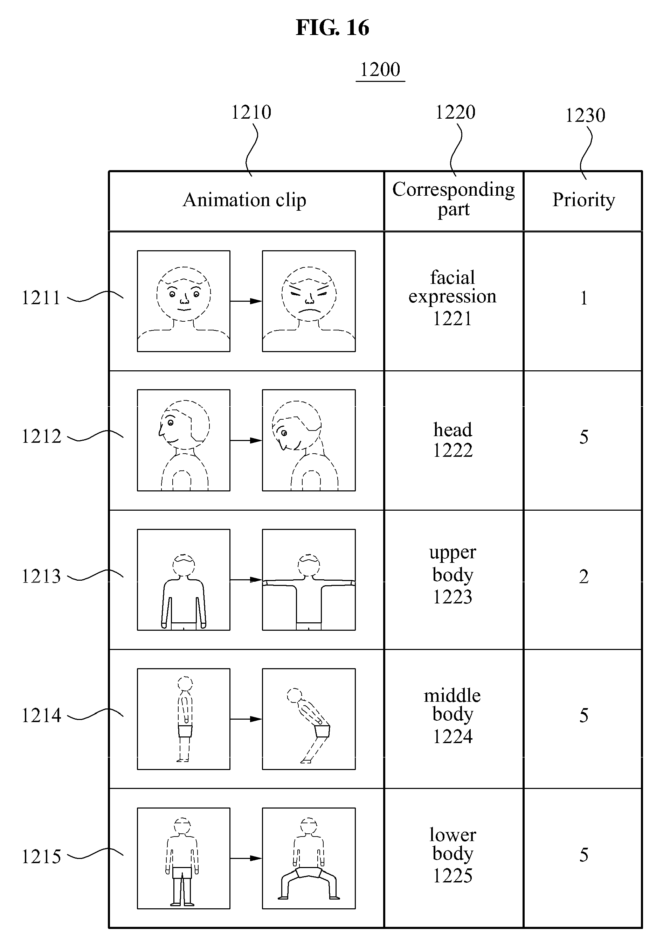

FIG. 16 illustrates a database 1200 with respect to motion data according to an embodiment.

Referring to FIG. 16, the database 1200 may be categorized into motion data 1210, a corresponding part 1220, and a priority 1230.

The motion data 1210 may be data obtained by processing values received from a motion sensor, and may be a category of the motion data corresponding to an arbitrary part of an avatar of a virtual world. Depending on embodiments, the motion data 1210 may be a category of the motion data corresponding to any one of a facial expression, a head, an upper body, a middle body, and a lower body of the avatar. For example, first motion data 1211 may be motion data corresponding to the facial expression of the avatar, and may be data concerning a grimacing motion of a user in the real world. In this instance, the data concerning the grimacing motion may be obtained such that the grimacing motion of the user of the real world is measured by the motion sensor, and the measured value is applicable in the facial expression of the avatar. Similarly, second motion data 1212 may be motion data corresponding to the head of the avatar, and may be data concerning a motion of lowering a head of the user of the real world. Third motion data 1213 may be motion data corresponding to the upper body of the avatar, and may be data concerning a motion of lifting arms of the user of the real world from side to side. Fourth motion data 1214 may be motion data corresponding to the middle body of the avatar, and may be data concerning a motion of shaking a butt of the user of the real world back and forth. Fifth motion data 1215 may be motion data corresponding to the lower part of the avatar, and may be data concerning a motion of spreading both legs of the user of the real world from side to side while bending.

The corresponding part 1220 may be a category of data indicating a part of an avatar the motion data corresponds to. Depending on embodiments, the corresponding part 1220 may be a category of data indicating any one of the facial expression, the head, the upper body, the middle body, and the lower body of the avatar that the motion data corresponds to. For example, since the first motion data 1211 is motion data corresponding to the facial expression of the avatar, a first corresponding part 1221 may be expressed as 'facial expression'. Since the second motion data 1212 is motion data corresponding to the head of the avatar, a second corresponding part 1222 may be expressed as 'head'. Since the third motion data 1213 is motion data corresponding to the upper body of the avatar, a third corresponding part 1223 may be expressed as 'upper body'. Since the fourth motion data 1214 is motion data corresponding to the middle body of the avatar, a fourth corresponding part 1224 may be expressed as 'middle body'. Since the fifth motion data 1215 is motion data corresponding to the lower body of the avatar, a fifth corresponding part 1225 may be expressed as 'lower body'.

The priority 1230 may be a category of values with respect to the priority of the motion data. Depending on embodiments, the priority 1230 may be a category of values with respect to the priority of the motion data corresponding to any one of the facial expression, the head, the upper body, the middle body, and the lower body of the avatar. For example, the first motion data 1211 corresponding to the facial expression may have a priority value of 1'. The second motion data 1212 corresponding to the head may have a priority value of '5'. The third motion data 1213 corresponding to the upper body may have a priority value of '2'. The fourth motion data 1214 corresponding to the middle body may have a priority value of '5'. The fifth motion data 1215 corresponding to the lower body may have a priority value of '5'. The priority value with respect to the motion data may be determined by the user of the real world in advance, or may be determined by a real-time input.

FIG. 17 illustrates operations determining motion object data to be applied in an arbitrary part of an avatar 1310 by comparing priorities according to an embodiment.

Referring to FIG. 17, the avatar 1310 may be divided into a facial expression 1311, a head 1312, an upper body 1313, a middle body 1314, and a lower body 1315.

Motion object data may be data concerning motions of an arbitrary part of an avatar. The motion object data may include an animation clip and motion data. The motion object data may be obtained by processing values received from a motion sensor, or by being read from the storage unit of the display device. Depending on embodiments, the motion object data may correspond to any one of a facial expression, a head, an upper body, a middle body, and a lower body of the avatar.

A database 1320 may be a database with respect to the animation clip. Also, the database 1330 may be a database with respect to the motion data.

The processing unit 1310 of the display device according to an embodiment may compare a priority of animation control information corresponding to a first part of the avatar 1310 with a priority of control control information corresponding to the first part of the avatar 1310 to thereby determine data to be applicable in the first part of the avatar.

Depending on embodiments, a first animation clip 1321 corresponding to the facial expression 1311 of the avatar 1310 may have a priority value of '5', and first motion data 1331 corresponding to the facial expression 1311 may have a priority value of ' '1'. Since the priority of the first animation clip 1321 is higher than the priority of the first motion data 1331, the processing unit may determine the first animation clip 1321 as the data to be applicable in the facial expression 1311.

Also, a second animation clip 1322 corresponding to the head 1312 may have a priority value of '2', and second motion data 1332 corresponding to the head 1312 may have a priority value of '5'. Since, the priority of the second motion data 1332 is higher than the priority of the second animation clip 1322, the processing unit may determine the second motion data 1332 as the data to be applicable in the head 1312.

Also, a third animation clip 1323 corresponding to the upper body 1313 may have a priority value of '5', and third motion data 1333 corresponding to the upper body 1313 may have a priority value of '2'. Since the priority of the third animation clip 1323 is higher than the priority of the third motion data 1333, the processing unit may determine the third animation clip 1323 as the data to be applicable in the upper body 1313.

Also, a fourth animation clip 1324 corresponding to the middle body 1314 may have a priority value of 1', and fourth motion data 1334 corresponding to the middle body 1314 may have a priority value of '5'. Since the priority of the fourth motion data 1334 is higher than the priority of the fourth animation clip 1324, the processing unit may determine the fourth motion data 1334 as the data to be applicable in the middle body 1314.

Also, a fifth animation clip 1325 corresponding to the lower body 1315 may have a priority value of '1', and fifth motion data 1335 corresponding to the lower body 1315 may have a priority value of '5'. Since the priority of the fifth motion data 1335 is higher than the priority of the fifth animation clip 1325, the processing unit may determine the fifth motion data 1335 as the data to be applicable in the lower body 1315.

Accordingly, as for the avatar 1310, the facial expression 1311 may have the first animation clip 1321, the head 1312 may have the second motion data 1332, the upper body 1313 may have the third animation clip 1323, the middle body 1314 may have the fourth motion data 1334, and the lower body 1315 may have the fifth motion data 1335.

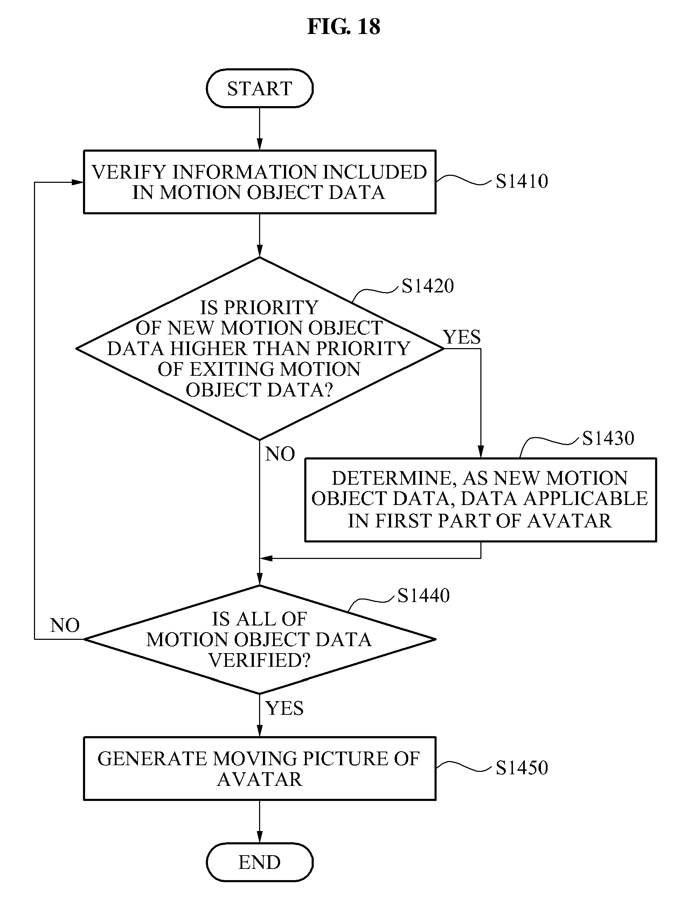

Data corresponding to an arbitrary part of the avatar 1310 may have a plurality of animation clips and a plurality of pieces of motion data. When a plurality of pieces of the data corresponding to the arbitrary part of the avatar 1310 is present, a method of determining data to be applicable in the arbitrary part of the avatar 1310 will be described in detail with reference to FIG. 18.

FIG. 18 is a flowchart illustrating a method of determining motion object data to be applied in each part of an avatar according to an embodiment.

Referring to FIG. 18, in operation S1410, the display device according to an embodiment may verify information included in motion object data. The information included in the motion object data may include information indicating a part of an avatar the motion object data corresponds to, and a priority of the motion object data.

When the motion object data corresponding to a first part of the avatar is absent, the display device may determine new motion object data obtained by being newly read or by being newly processed, as data to be applicable in the first part.

In operation S1420, when the motion object data corresponding to the first part is present, the processing unit may compare a priority of an existing motion object data and a priority of the new motion object data.

In operation S1430, when the priority of the new motion object data is higher than the priority of the existing motion object data, the display device may determine the new motion object data as the data to be applicable in the first part of the avatar.

However, when the priority of the existing motion object data is higher than the priority of the new motion object data, the display device may determine the existing motion object data as the data to be applicable in the first part.

In operation S1440, the display device may determine whether all motion object data is determined.

When the motion object data not being verified is present, the display device may repeatedly perform operations S1410 to S1440 with respect to the all motion object data not being determined.

In operation S1450, when the all motion object data are determined, the display device may associate data having a highest priority from the motion object data corresponding to each part of the avatar to thereby generate a moving picture of the avatar.

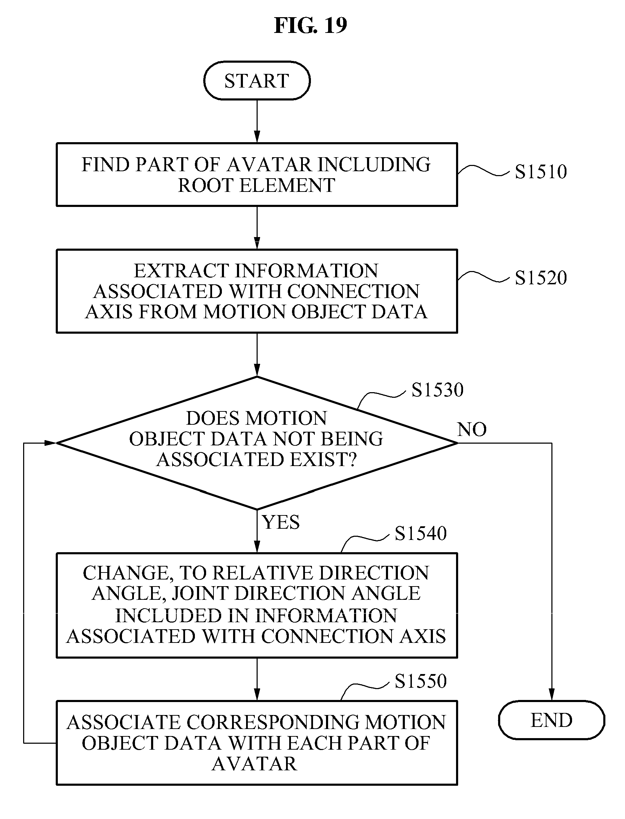

The processing unit of the display device according to an embodiment may compare a priority of animation control information corresponding to each part of the avatar with a priority of control control information corresponding to each part of the avatar to thereby determine data to be applicable in each part of the avatar, and may associate the determined data to thereby generate a moving picture of the avatar. A process of determining the data to be applicable in each part of the avatar has been described in detail in FIG. 18, and thus descriptions thereof will be omitted. A process of generating a moving picture of an avatar by associating the determined data will be described in detail with reference to FIG. 19.

FIG. 19 is a flowchart illustrating an operation of associating corresponding motion object data with each part of an avatar according to an embodiment.

Referring to FIG. 19, in operation S1510, the display device according to an embodiment may find a part of an avatar including a root element.

In operation S1520, the display device may extract information associated with a connection axis from motion object data corresponding to the part of the avatar. The motion object data may include an animation clip and motion data. The motion object data may include information associated with the connection axis.

In operation S1530, the display device may verify whether motion object data not being associated is present.

When the motion object data not being associated is absent, since all pieces of data corresponding to each part of the avatar are associated, the process of generating the moving picture of the avatar will be terminated.

In operation S1540, when the motion object data not being associated is present, the display device may change, to a relative direction angle, a joint direction angle included in the connection axis extracted from the motion object data. Depending on embodiments, the joint direction angle included in the information associated with the connection axis may be the relative direction angle. In this case, the display device may directly proceed to operation S1550 while omitting operation S1540.

Hereinafter, according to an embodiment, when the joint direction angle is an absolute direction angle, a method of changing the joint direction angle to the relative direction angle will be described in detail. Also, in a case where an avatar of a virtual world is divided into a facial expression, a head, an upper body, a middle body, and a lower body will be described herein in detail.

Depending on embodiments, motion object data corresponding to the middle body of the avatar may include body center coordinates. The joint direction angle of the absolute direction angle may be changed to the relative direction angle based on a connection portion of the middle part including the body center coordinates.

The display device may extract the information associated with the connection axis stored in the motion object data corresponding to the middle part of the avatar. The information associated with the connection axis may include a joint direction angle between a thoracic vertebrae corresponding to a connection portion of the upper body of the avatar with a cervical vertebrae corresponding to a connection portion of the head, a joint direction angle between the thoracic vertebrae and a left clavicle, a joint direction angle between the thoracic vertebrae and a right clavicle, a joint direction angle between a pelvis corresponding to a connection portion of the middle part and a left femur corresponding to a connection portion of the lower body, and a joint direction angle between the pelvis and the right femur.

For example, the joint direction angle between the pelvis and the right femur may be expressed as the following Equation 1:

$$[\text{Equation 1}]$$

$$A(\theta_{RightFemur}) = R_{RightFemur\_Pelvis} A(\theta_{Pelvis})$$

In Equation 1, a function A(.) denotes a direction cosine matrix, $R_{RightFemur-Pelvis}$ denotes a rotational matrix with respect to the direction angle between the pelvis and the right femur, $\Theta_{RightFemur}$ denotes a joint direction angle in the right femur of the lower body of the avatar, and $\Theta_{Pelvis}$ denotes a joint direction angle between the pelvis and the right femur.

Using Equation 1, a rotational function may be calculated as illustrated in the following Equation 2:

$$[\text{Equation 2}]$$

$$R_{RightFemur\_Pelvis} = A(\theta_{RightFemur}) A(\theta_{Pelvis})^{-1}.$$

The joint direction angle of the absolute direction angle may be changed to the relative direction angle based on the connection portion of the middle body of the avatar including the body center coordinates. For example, using the rotational function of Equation 2, a joint direction angle, that is, an absolute direction angle included in information associated with a connection axis, which is stored in the motion object data corresponding to the lower body of the avatar, may be changed to a relative direction angle as illustrated in the following Equation 3:

$$[\text{Equation 3}]$$

$$A(\theta') = R_{RightFemur\_Pelvis} A(\theta).$$

Similarly, a joint direction angle, that is, an absolute direction angle included in information associated with a connection axis, which is stored in the motion object data corresponding to the head and upper body of the avatar, may be changed to a relative direction angle.

Through the above described method of changing the joint direction angle to the relative direction angle, when the joint direction angle is changed to the relative direction angle, using information associated with the connection axis stored in motion object data corresponding to each part of the avatar, the display device may associate the motion object data corresponding to each part of the avatar in operation S1550.

The display device may return to operation S1530, and may verify whether the motion object data not being associated is present in operation S1530.

When the motion object data not being associated is absent, since all pieces of data corresponding to each part of the avatar are associated, the process of generating the moving picture of the avatar will be terminated.

FIG. 20 illustrates an operation of associating corresponding motion object data with each part of an avatar according to an embodiment.

Referring to FIG. 20, the display device according to an embodiment may associate motion object data 1610 corresponding to a first part of an avatar and motion object data 1620 corresponding to a second part of the avatar to thereby generate a moving picture 1630 of the avatar.

The motion object data 1610 corresponding to the first part may be any one of an animation clip and motion data. Similarly, the motion object data 1620 corresponding to the second part may be any one of an animation clip and motion data.

According to an embodiment, the storage unit of the display device may further store information associated with a connection axis 1601 of the animation clip, and the processing unit may associate the animation clip and the motion data based on the information associated with the connection axis 1601. Also, the processing unit may associate the animation clip and another animation clip based on the information associated with the connection axis 1601 of the animation clip.

Depending on embodiments, the processing unit may extract the information associated with the connection axis from the motion data, and enable the connection axis 1601 of the animation clip and a connection axis of the motion data to correspond to each to thereby associate the animation clip and the motion data. Also, the processing unit may associate the motion data and another motion data based on the information associated with the connection axis extracted from the motion data. The information associated with the connection axis was described in detail in FIG. 19 and thus, further description related thereto will be omitted here.

Hereinafter, an example of the display device adapting a face of a user in a real world onto a face of an avatar of a virtual world will be described.

The display device may sense the face of the user of the real world using a real world device, for example, an image sensor, and adapt the sensed face onto the face of the avatar of the virtual world. When the avatar of the virtual world is divided into a facial expression, a head, an upper body, a middle body, and a lower body, the display device may sense the face of the user of the real world to thereby adapt the sensed face of the real world onto the facial expression and the head of the avatar of the virtual world.

Depending on embodiments, the display device may sense feature points of the face of the user of the real world to collect data about the feature points, and may generate the face of the avatar of the virtual world using the data about the feature points.

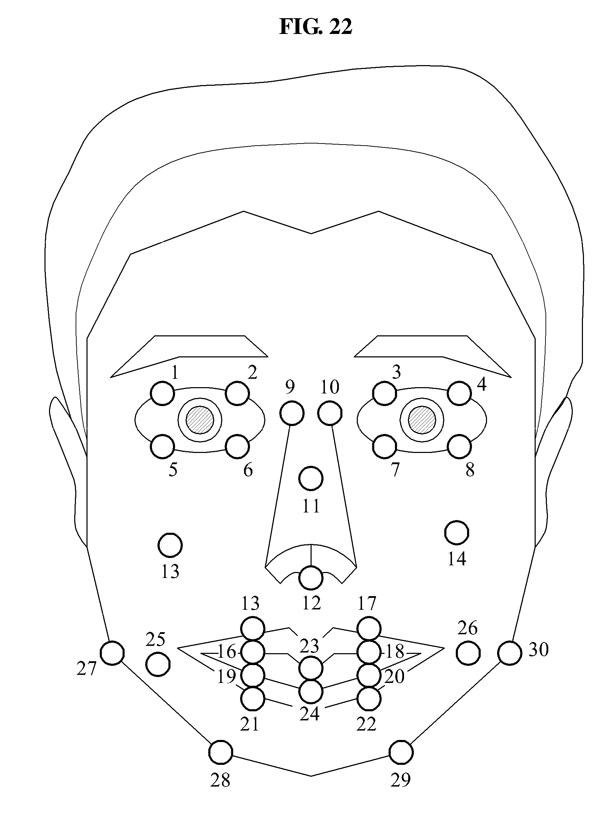

Hereinafter, an example of applying a face of a user of a real world to a face of an avatar of a virtual world will be described with reference to FIG. 21 and FIG. 22.

FIG. 21 illustrates feature points for sensing a face of a user of a real world by a display device according to an embodiment.

Referring to FIG 21, the display device may set feature points 1, 2, 3, 4, 5, 6, 7, and 8 for sensing the face of the user of the real world. The display device may collect data by sensing portions corresponding to the feature points 1, 2, and 3 from the face of the user of the real world. The data may include a color, a position, a depth, an angle, a refractive index, and the like with respect to the portions corresponding to the feature points 1, 2, and 3. The display device may generate a plane for generating a face of an avatar of a virtual world using the data. Also, the display device may generate information associated with a connection axis of the face of the avatar of the virtual world.

The display device may collect data by sensing portions corresponding to the feature points 4, 5, 6, 7, and 8 from the face of the user of the real world. The data may include a color, a position, a depth, an angle, a refractive index, and the like with respect to the portions corresponding to the feature points 4, 5, 6, 7, and 8. The display device may generate an outline structure of the face of the avatar of the virtual world.

The display device may generate the face of the avatar of the virtual world by combining the plane that is generated using the data collected by sensing the portions corresponding to the feature points 1, 2, and 3, and the outline structure that is generated using the data collected by sensing the portions corresponding to the feature points 4, 5, 6, 7, and 8.

Table 2 shows data that may be collectable to express the face of the avatar of the virtual world.

[Table 2]

| Elements | Definition |
| --- | --- |
| FacialDefinition | Level of brightness of the face from 1-lighted to 5 dark |
| Freckless | Freckless (5 levels, 1=smallest, 5= biggest) |
| Wrinkles | Wrinkles (yes or no) |
| RosyComplexion | Rosy Complexion (yes or no) |
| LipPinkness | Lip Pinkness (5 levels, 1=smallest, 5= biggest) |
| Lipstick | Lipstick (yes or no) |
| LipstickColor | Lipstick Color (RGB) |
| Lipgloss | Lipgloss (5 levels, 1=smallest, 5= biggest) |
| Blush | Blush (yes or no) |
| BlushColor | Blush Color (RGB) |

(continued)

| Elements | Definition |
|---|---|
| BlushOpacity | Blush Opacity (%) |
| InnerShadow | Inner Shadow (yes or no) |
| InnerShadowColor | Inner Shadow Color (RGB) |
| InnerShadowOpacity | Inner Shadow Opacity (%) |
| OuterShadow | Outer Shadow (yes or no) |
| OuterShadowOpacity | Outer Shadow Opacity (%) |
| Eyeliner | Eyeliner (yes or no) |
| EyelinerColor | Eyeliner Color (RGB) |
| Sellion | Feature point 1 of FIG. 21 |
| r_infraorbitale | Feature point 2 of FIG. 21 |
| l_infraorbitale | Feature point 3 of FIG. 21 |
| supramenton | Feature point 4 of FIG. 21 |
| r_tragion | Feature point 5 of FIG. 21 |
| r_gonion | Feature point 6 of FIG 21 |
| l_tragion | Feature point 7 of FIG. 21 |
| l_gonion | Feature point 8 of FIG. 21 |

FIG. 22 illustrates feature points for sensing a face of a user of a real world by a display device according to another embodiment.

Referring to FIG. 22, the display device may set feature points 1 to 30 for sensing the face of the user of the real world. An operation of generating a face of an avatar of a virtual world using the feature points 1 to 30 is described above with reference to FIG. 21 and thus, further description will be omitted here.

Source 1 may refer to a program source of data that may be collectable to express the face of the avatar of the virtual world using extensible Markup Language (XML). However, Source 1 is only an example and thus, embodiments are not limited thereto.

[Source 1]

```
<xsd:complexType name="FaceFeaturesControlType">
    <xsd:sequence>
        <xsd:element name="HeadOutline" type="Outline" minOccurs="0"/>
        <xsd:element name="LeftEyeOutline" type="Outline" minOccurs="0"/>
        <xsd:element name="RightOutline" type="Outline" minOccurs="0"/>
        <xsd:element name="LeftEyeBrowOutline" type="Outline" minOccurs="0"/>
        <xsd:element name="RightEyeBrowOutline" type="Outline" minOccurs="0"/>
        <xsd:element name="LeftEarOutline" type="Outline" minOccurs="0"/>
        <xsd:element name="RightEarOutline" type="Outline" minOccurs="0"/>
        <xsd:element name="NoseOutline" type="Outline"/>
        <xsd:element name="MouthLipOutline" type="Outline"/>
```

```
                    <xsd:element                    name="MiscellaneousPoints"
type="MiscellaneousPointsType"/>
                <//xsd:sequence>
                <xsd:attribute name="Name" type="CDATA"/>
        </xsd:complexType>
        <xsd:complexType name="MiscellaneousPointsType">
            <xsd:sequence>
                    <xsd:element name="Point1" type="Point" minOccurs="0"/>
                    <xsd:element name="Point2" type="Point" minOccurs="0"/>
                    <xsd:element name="Point3" type="Point" minOccurs="0"/>
                    <xsd:element name="Point4" type="Point" minOccurs="0"/>
                    <xsd:element name="Point5" type="Point" minOccurs="0"/>
                    <xsd:element name="Point6" type="Point" minOccurs="0"/>
                    <xsd:element name="Point7" type="Point" minOccurs="0"/>
                    <xsd:element name="Point8" type="Point" minOccurs="0"/>
                    <xsd:element name="Point9" type="Point" minOccurs="0"/>
                    <xsd:element name="Point10" type="Point" minOccurs="0"/>
                    <xsd:element name="Point11" type="Point" minOccurs="0"/>
                    <xsd:element name="Point12" type="Point" minOccurs="0"/>
                    <xsd:element name="Point13" type="Point" minOccurs="0"/>
                    <xsd:element name="Point14" type="Point" minOccurs="0"/>
                    <xsd:element name="Point15" type="Point" minOccurs="0"/>
                    <xsd:element name="Point16" type="Point" minOccurs="0"/>
                    <xsd:element name="Point17" type="Point" minOccurs="0"/>
                    <xsd:element name="Point18" type="Point" minOccurs="0"/>
                    <xsd:element name="Point19" type="Point" minOccurs="0"/>
                    <xsd:element name="Point20" type="Point" minOccurs="0"/>
                    <xsd:element name="Point21" type="Point" minOccurs="0"/>
                    <xsd:element name="Point22" type="Point" minOccurs="0"/>
                    <xsd:element name="Point23" type="Point" minOccurs="0"/>
```

```
            <xsd:element name="Point24" type="Point" minOccurs="0"/>

            <xsd:element name="Point25" type="Point" minOccurs="0"/>

            <xsd:element name="Point26" type="Point" minOccurs="0"/>

            <xsd:element name="Point27" type="Point" minOccurs="0"/>

            <xsd:element name="Point28" type="Point" minOccurs="0"/>

            <xsd:element name="Point29" type="Point" minOccurs="0"/>

            <xsd:element name="Point30" type="Point" minOccurs="0"/>

        </xsd:sequence>

    </xsd:complexType>
```

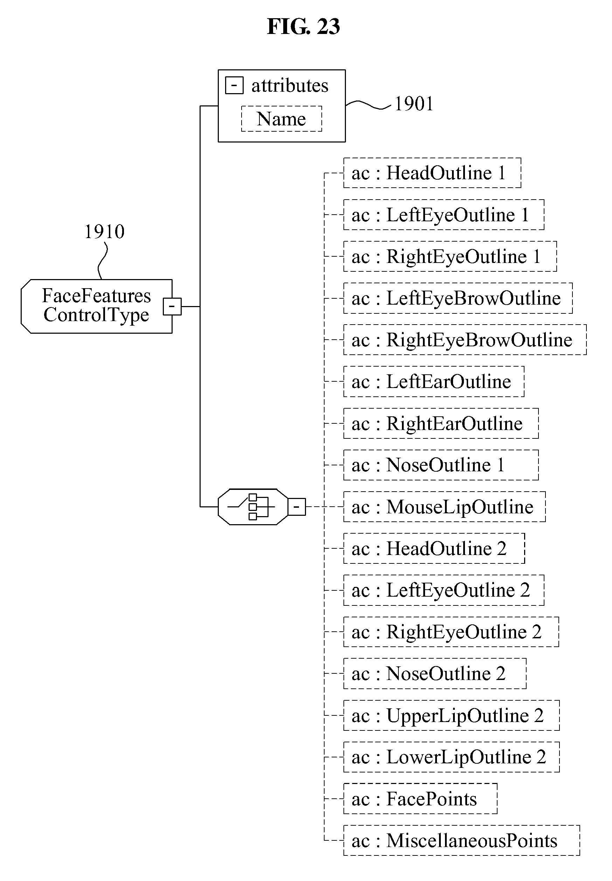

FIG. 23 illustrates a face features control type (FaceFeaturesControlType) 1910 according to an embodiment.
Referring to FIG. 23, the face feature control type 1910 may include attributes 1901 and elements.
Source 2 shows a program source of the face features control type using XML. However, Source 2 is only an example and thus, embodiments are not limited thereto.

[Source 2]

```
        <complexType name="FaceFeaturesControlType">
            <choice>
                    <element name="HeadOutline1" type="Outline" minOccurs="0"/>
                    <element name="LeftEyeOutline1" type="Outline" minOccurs="0"/>
                    <element name="RightEyeOutline1" type="Outline" minOccurs="0"/>
                    <element            name="LeftEyeBrowOutline"          type="Outline"
minOccurs="0"/>
                    <element            name="RightEyeBrowOutline"         type="Outline"
minOccurs="0"/>
                    <element name="LeftEarOutline" type="Outline" minOccurs="0"/>
                    <element name="RightEarOutline" type="Outline" minOccurs="0"/>
                    <element name="NoseOutline1" type="Outline" minOccurs="0"/>
                    <element name="MouthLipOutline" type="Outline" minOccurs="0"/>
                    <element            name="HeadOutline2"       type="HeadOutline2Type"
minOccurs="0"/>
                    <element            name="LeftEyeOutline2"         type="EyeOutline2Type"
minOccurs="0"/>
                    <element            name="RightEyeOutline2"        type="EyeOutline2Type"
minOccurs="0"/>
                    <element            name="NoseOutline2"         type="NoseOutline2Type"
```

```
                                              minOccurs="0"/>
                                    <element    name="UpperLipOutline2"    type="UpperLipOutline2Type"
                          minOccurs="0"/>
                                    <element    name="LowerLipOutline2"    type="LowerLipOutline2Type"
                          minOccurs="0"/>
                                    <element name="FacePoints" type="FacePointSet" minOccurs="0"/>
                                    <element                                name="MiscellaneousPoints"
                          type="MiscellaneousPointsType" minOccurs="0"/>
                                  </choice>
                                  <attribute name="Name" type="CDATA"/>
                            </complexType>
```

The attributes 1901 may include a name. The name may be a name of a face control configuration, and may be optional.

Elements of the face features control type 1901 may include "HeadOutlinel", "LeftEyeOutlinel", "RightEyeOutline1", "HeadOutline2", "LeftEyeOutline2", "RightEyeOutline2", "LeftEyebrowOutfine", "RightEyebrowOutline", "LeftEarOutline", "RightEarOutline", "NoseOutline1", "NoseOutline2", "MouthLipOutline", "UpperLipOutline2", "LowerLipOutline2", "FacePoints", and "MiscellaneousPoints".

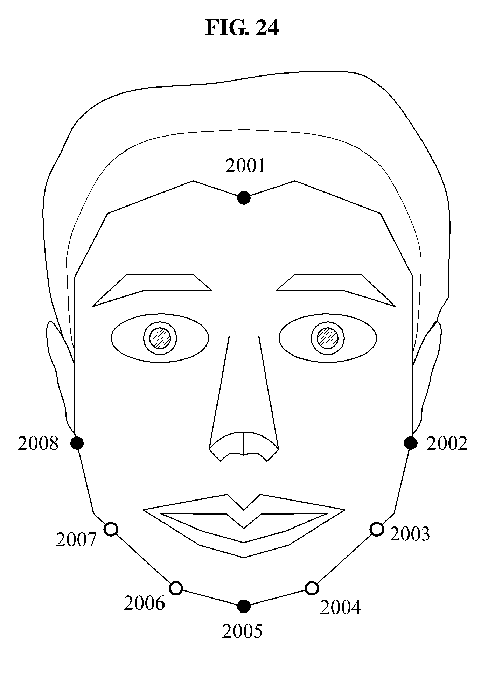

Hereinafter, the elements of the face features control type will be described with reference to FIG. 24 through FIG. 36.

FIG. 24 illustrates head outline 1 (HeadOutline1) according to an embodiment.

Referring to FIG. 24, head outline 1 may be a basic outline of a head that is generated using feature points of top 2001, left 2002, bottom 2005, and right 2008.

Depending on embodiments, head outline 1 may be an extended outline of a head that is generated by additionally employing feature points of bottom left 1 2003, bottom left 2 2004, bottom right 2 2006, and bottom right 1 2007 as well as the feature points of top 2001, left 2002, bottom 2005, and right 2008.

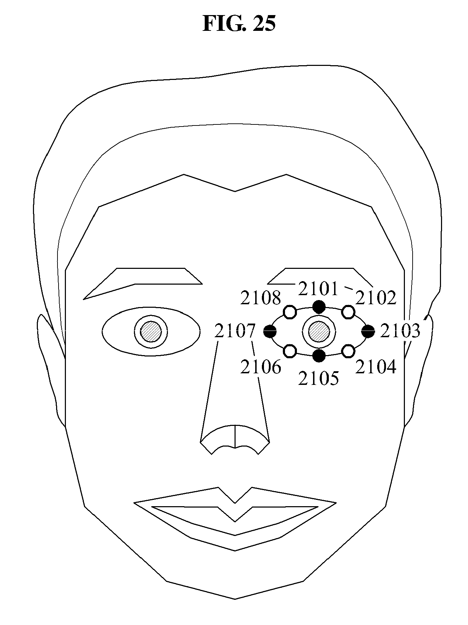

FIG. 25 illustrates left eye outline 1 (LeftEyeOutline1) and left eye outline 2 (LeftEyeOutline2) according to an embodiment.

Referring to FIG. 25, left eye outline 1 may be a basic outline of a left eye that is generated using feature points of top 2101, left 2103, bottom 2105, and right 2107.

Left eye outline 2 may be an extended outline of the left eye that is generated by additionally employing feature points of top left 2102, bottom left 2104, bottom right 2106, and top right 2108 as well as the feature points of top 2101, left 2103, bottom 2105, and right 2107. Left eye outline 2 may be a left eye outline for a high resolution image.

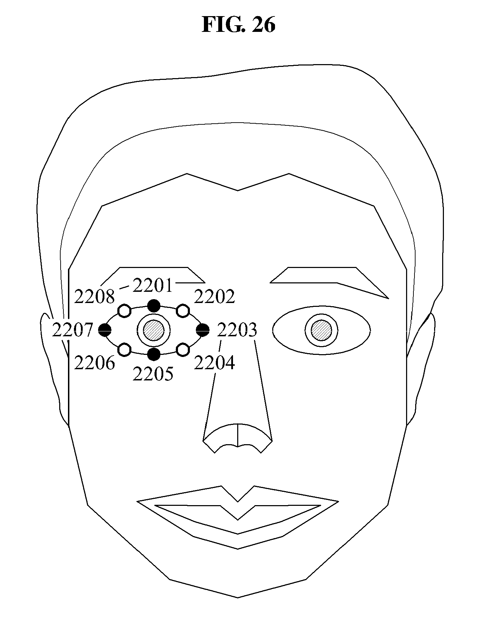

FIG. 26 illustrates right eye outline 1 (RightEyeOutlinel) and right eye outline 2 (RightEyeOutline2) according to an embodiment.

Referring to FIG. 26, right eye outline 1 may be a basic outline of a right eye that is generated using feature points of top 2201, left 2203, bottom 2205, and right 2207.

Right eye outline 2 may be an extended outline of the right eye that is generated by additionally employing feature points of top left 2202, bottom left 2204, bottom right 2206, and top right 2208 as well as the feature points of top 2201, left 2203, bottom 2205, and right 2207. Right eye outline 2 may be a right eye outline for a high resolution image.

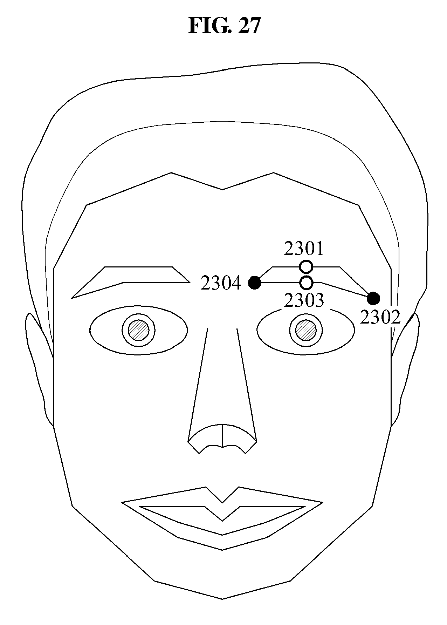

FIG. 27 illustrates a left eyebrow outline (LeftEyebrowOutline) according to an embodiment.

Referring to FIG. 27, the left eyebrow outline may be an outline of a left eyebrow that is generated using feature points of top 2301, left 2302, bottom 2303, and right 2304.

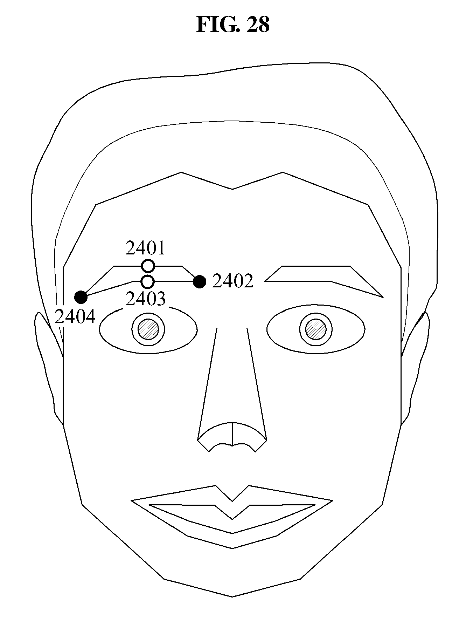

FIG. 28 illustrates a right eyebrow outline (RightEyebrowOutline) according to an embodiment.

Referring to FIG. 28, the right eyebrow outline may be an outline of a right eyebrow that is generated using feature points of top 2401, left 2402, bottom 2403, and right 2404.

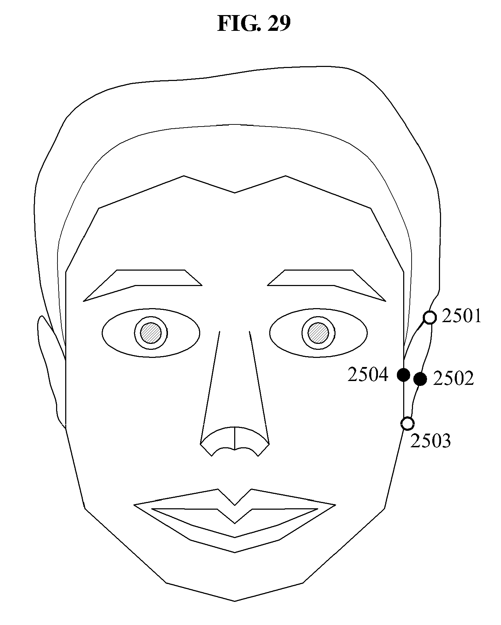

FIG. 29 illustrates a left ear outline (LeftEarOutline) according to an embodiment.

Referring to FIG 29, the left ear outline may be an outline of a left ear that is generated using feature points of top 2501, left 2502, bottom 2503, and right 2504.

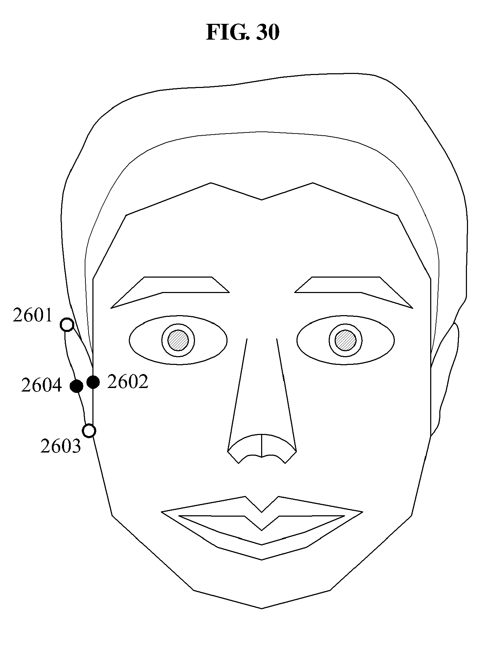

FIG. 30 illustrates a right ear outline (RightEarOutline) according to an embodiment.

Referring to FIG. 30, the right ear outline may be an outline of a right ear that is generated using feature points of top 2601, left 2602, bottom 2603, and right 2604.

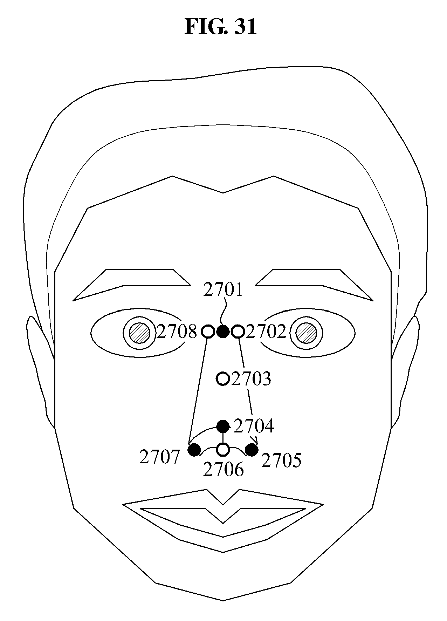

FIG. 31 illustrates noise outline 1 (NoseOutline1) and noise outline 2 (NoseOutline2) according to an embodiment.

Referring to FIG. 31, nose outline 1 may be a basic outline of a nose that is generated using feature points of top 2701, left 2705, bottom 2704, and right 2707.

Nose outline 2 may be an extended outline of a nose that is generated by additionally employing feature points of top left 2702, center 2703, lower bottom 2706, and top right 2708 as well as the feature points of top 2701, left 2705, bottom 2704, and right 2707. Nose outline 2 may be a nose outline for a high resolution image.

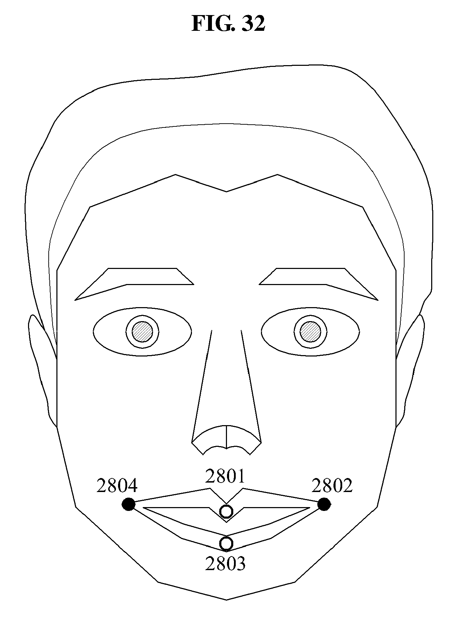

FIG. 32 illustrates a mouth lip outline (MouthLipOutline) according to an embodiment.

Referring to FIG. 32, the mouth lip outline may be an outline of lips that are generated using feature points of top 2801, left 2802, bottom 2803, and right 2804.

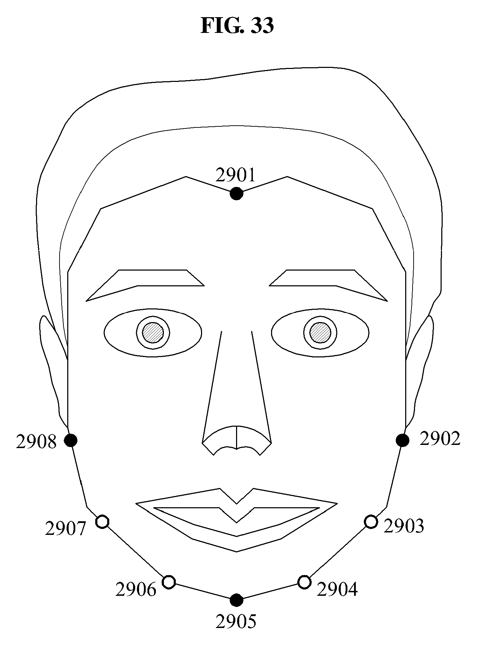

FIG. 33 illustrates head outline 2 (HeadOutline2) according to an embodiment.

Referring to FIG 33, head outline 2 may be an outline of a head that is generated using feature points of top 2901, left 2902, bottom left 1 2903, bottom left 2 2904, bottom 2905, bottom right 2 2906, bottom right 1 2907, and right 2908. Head outline 2 may be a head outline for a high resolution image.

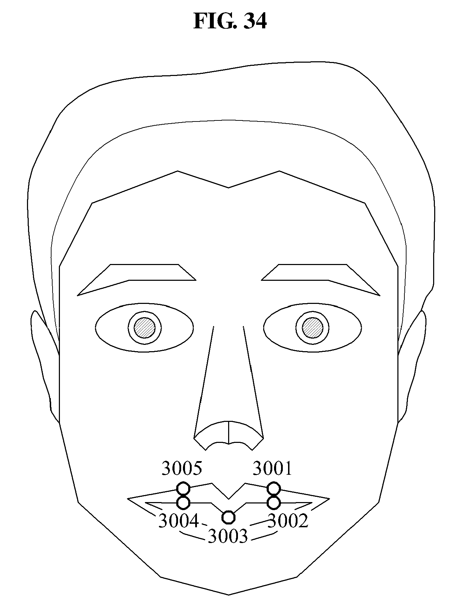

FIG. 34 illustrates an upper lip outline (UpperLipOutline) according to an embodiment.

Referring to FIG 34, the upper lip outline may be an outline of the upper lip that is generated using feature points of top left 3001, bottom left 3002, bottom 3003, bottom right 3004, and top right 3005. The upper lip outline may be an outline for a high resolution image about an upper lip portion of the mouth lips outline.

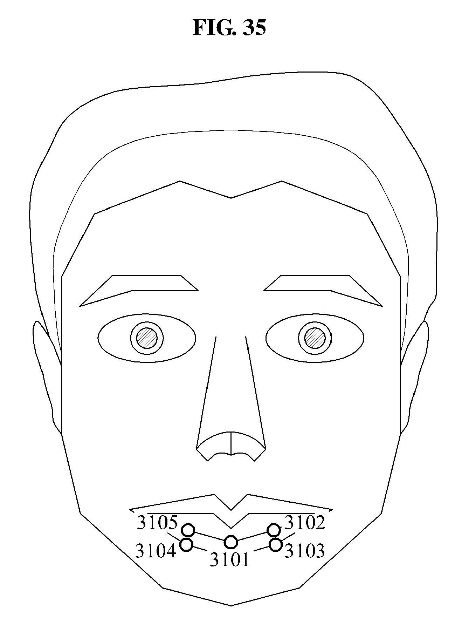

FIG. 35 illustrates a lower lip outline (LowerLipOutline) according to an embodiment.

Referring to FIG. 35, the lower lip outline may be an outline of a lower lip that is generated using feature points of top 3101, top left 3102, bottom left 3103, bottom right 3104, and top right 3105. The lower lip outline may be an outline for a high resolution image about a lower lip portion of the mouth lips outline.

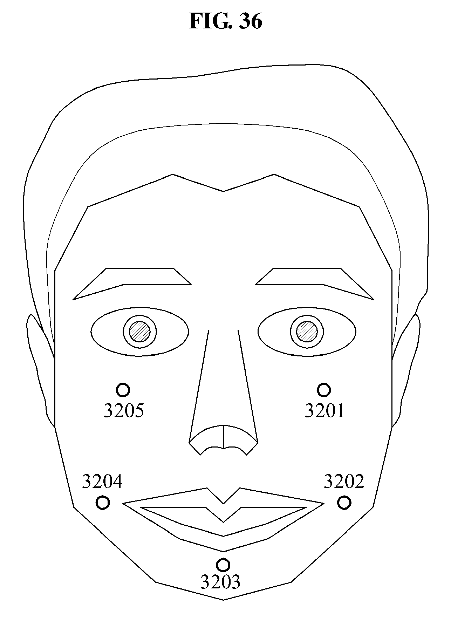

FIG. 36 illustrates face points according to an embodiment.

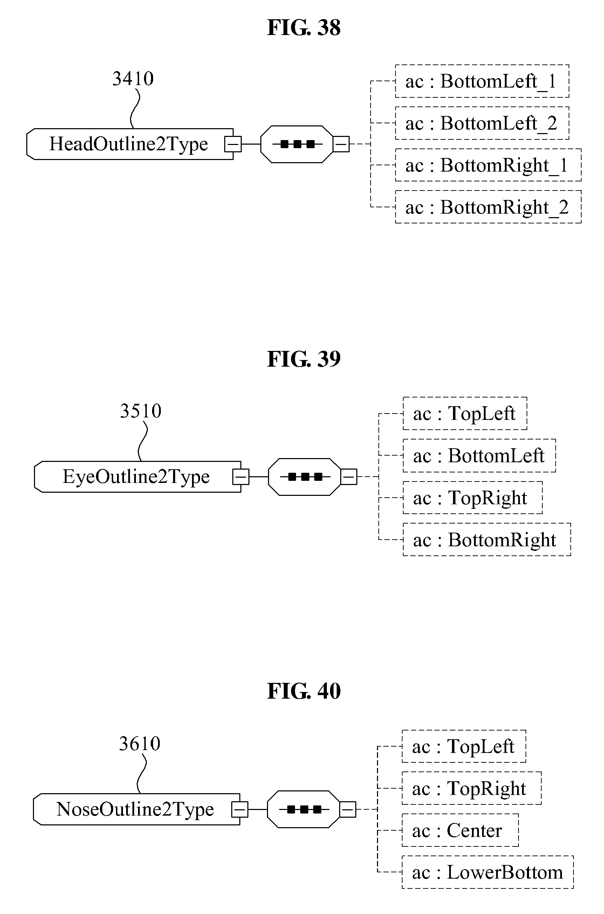

Referring to FIG. 38, face points may be a facial expression that is generated using feature points of top left 3201, bottom left 3202, bottom 3203, bottom right 3204, and top right 3205. The face points may be an element for a high resolution image of the facial expression.

According to an aspect, a miscellaneous point may be a feature point that may define and additionally locate predetermined feature point in order to control a facial characteristic.

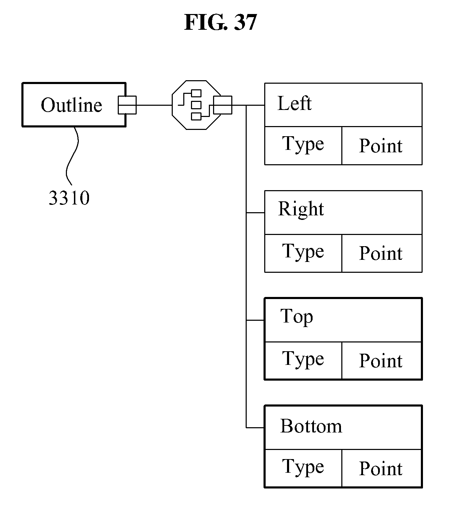

FIG. 37 illustrates an outline diagram according to an embodiment.

Referring to FIG 37, an outline 3310 may include elements. The elements of the outline 3310 may include "left", "right", "top", and "bottom".

Source 3 shows a program source of the outline 3310 using XML. However, Source 3 is only an example and thus, embodiments are not limited thereto.

[Source 3]

```
<xsd:complexType name="OutlineType">
    <xsd:sequence>
        <xsd:element name="Left" type="Point "minOccurs="0"/>
        <xsd:element name="Right" type="Point "minOccurs="0"/>
        <xsd:element name="Top" type="Point "minOccurs="0"/>
        <xsd:element name="Bottom" type="Point "minOccurs="0"/>
    </xsd:sequence>
</xsd:complexType>
```

The element "left" may indicate a left feature point of an outline.

The element "right" may indicate a right feature point of the outline.

The element "top" may indicate a top feature point.

The element "bottom" may indicate a bottom feature point of the outline.

FIG. 38 illustrates a head outline 2 type (HeadOutline2Type) 3410 according to an embodiment.

Referring to FIG. 38, the head outline 2 type 3410 may include elements. The elements of the head outline 2 type 3410 may include "BottomLeft_1", "BottomLeft_2", "BottomRight_1", and "Bottom_Right_2".

Source 4 shows a program source of the head outline 2 type 3410 using XML. However, Source 4 is only an example and thus, embodiments are not limited thereto.

[Source 4]

```
<complexType name="HeadOutline2Type">
    <sequence>
        <element name="BottomLeft_1" type="Point" minOccurs="0"/>
        <element name="BottomLeft_2" type="Point" minOccurs="0"/>
        <element name="BottomRight_1" type="Point" minOccurs="0"/>
        <element name="BottomRight_2" type="Point" minOccurs="0"/>
    </sequence>
</complexType>
```

The element "BottomLeft_1" may indicate a feature point that is positioned below left of an outline close to a left feature point of the outline.
The element "BottomLeft_2" may indicate a feature point that is positioned below left of the outline close to a bottom feature point of the outline.
The element "BottomRight_1" may indicate a feature point that is positioned below right of the outline close to a right feature point of the outline.
The element "BottomRight_2" may indicate a feature point that is positioned below right of the outline close to the bottom feature point of the outline.
FIG. 39 illustrates an eye outline 2 type (EyeOutline2Type) 3510 according to an embodiment.
Referring to FIG. 39, the eye outline 2 type 3510 may include elements. The elements of the eye outline 2 type 3510 may include "TopLeft", "BottomLeft", "TopRight", and "BottomRight".
Source 5 shows a program source of the eye outline 2 type 3510 using XML. However, Source 5 is only an example and thus, embodiments are not limited thereto.

[Source 5]

```
<complexType name="EyeOutline2Type">
    <sequence>
        <element name="TopLeft" type="Point" minOccurs="0"/>
        <element name="TopRight" type="Point" minOccurs="0"/>
        <element name="BottomLeft" type="Point" minOccurs="0"/>
        <element name="BottomRight" type="Point" minOccurs="0"/>
    </sequence>
</complexType>
```

The element "TopLeft" may indicate a feature point that is positioned at top left of an eye outline.
The element "BottomLeft" may indicate a feature point that is positioned at bottom left of the eye outline.
The element "TopRight" may indicate a feature point that is positioned at top right of the eye outline.
The element "BottomRight" may indicate a feature point that is positioned at bottom right of the eye outline.
FIG. 40 illustrates a nose outline 2 type (NoseOutline2Type) 3610 according to an embodiment.
Referring to FIG. 40, the nose outline 2 type 3610 may include elements. The element of the nose outline 2 type 3610 may include "TopLeft", "TopRight", "Center", and "LowerBottom" .
Source 6 shows a program source of the nose outline 2 type 3610 using XML. However, Source 6 is only an example and thus, embodiments are not limited thereto.

[Source 6]

```
<complexType name="NoseOutline2Type">
    <sequence>
        <element name="TopLeft" type="Point" minOccurs="0"/>
        <element name="TopRight" type="Point" minOccurs="0"/>
        <element name="Center" type="Point" minOccurs="0"/>
        <element name="LowerBottom" type="Point" minOccurs="0"/>
    </sequence>
</complexType>
```

The element "TopLeft" may indicate a top left feature point of a nose outline that is positioned next a top feature point of the nose outline.
The element "TopRight" may indicate a top right feature point of the nose outline that is positioned next to the top feature point of the nose outline.
The element "Center" may indicate a center feature point of the nose outline that is positioned between the top feature point and a bottom feature point of the nose outline.
The element "LowerBottom" may indicate a lower bottom feature point of the nose outline that is positioned below a lower feature point of the nose outline.

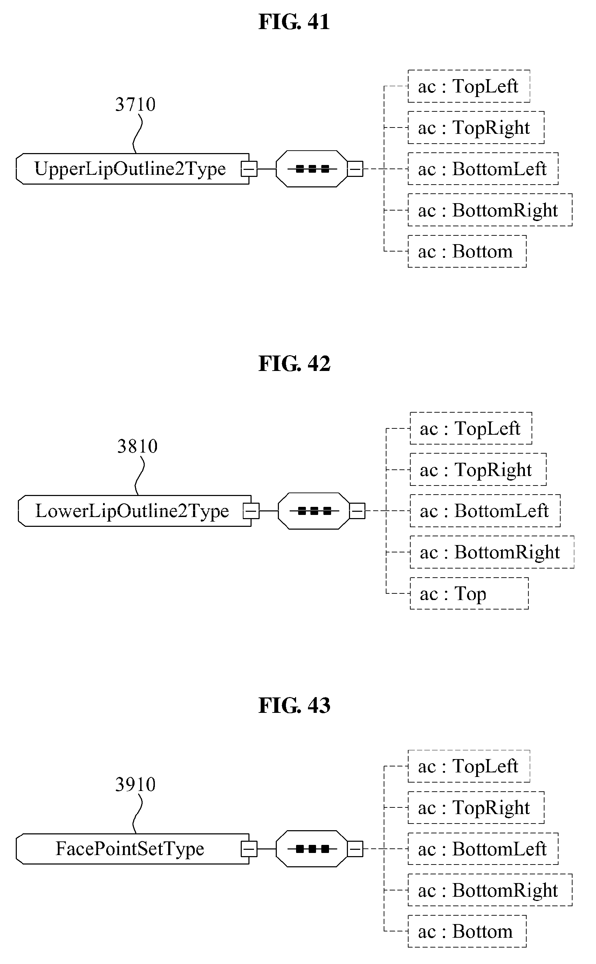

FIG. 41 illustrates an upper lip outline 2 type (UpperLipOutline2Type) 3710 according to an embodiment.
Referring to FIG. 41, the upper lip outline 2 type 3710 may include elements. The element of the upper lip outline 2 type 3710 may include "TopLeft", "TopRight", "BottomLeft", "BottomRight", and "Bottom".
Source 7 shows a program source of the upper lip outline 2 type 3710 using XML. However, Source 7 is only an example and thus, embodiments are not limited thereto.

[Source 7]

```
<complexType name="UpperLipOutline2Type">
    <sequence>
        <element name="TopLeft" type="Point" minOccurs="0"/>
        <element name="TopRight" type="Point" minOccurs="0"/>
        <element name="BottomLeft" type="Point" minOccurs="0"/>
        <element name="BottomRight" type="Point" minOccurs="0"/>
        <element name="Bottom" type="Point" minOccurs="0"/>
    </sequence>
</complexType>
```

The element "TopLeft" may indicate a top left feature point of an upper lip outline.
The element "TopRight" may indicate a top right feature point of the upper lip outline.
The element "BottomLeft" may indicate a bottom left feature point of the upper lip outline.
The element "BottomRight" may indicate a bottom right feature point of the upper lip outline.

The element "Bottom" may indicate a bottom feature point of the upper lip outline.

FIG. 42 illustrates a lower lip outline 2 type (LowerLipOutline2Type) 3810 according to an embodiment.

Referring to FIG. 42, the lower lip outline 2 type 3810 may include elements. The elements of the lower lip outline 2 type 3810 may include "TopLeft", "TopRight", "BottomLeft", "BottomRight", and "Top".

Source 8 shows a program source of the lower lip outline 2 type 3810 using XML. However, Source 8 is only an example and thus, embodiments are not limited thereto.

[Source 8]

```
<complexType name="LowerLipOutline2Type">

    <sequence>

        <element name="TopLeft" type="Point" minOccurs="0"/>

        <element name="TopRight" type="Point" minOccurs="0"/>

        <element name="Top" type="Point" minOccurs="0"/>

        <element name="BottomLeft" type="Point" minOccurs="0"/>

        <element name="BottomRight" type="Point" minOccurs="0"/>

    </sequence>

</complexType>
```

The element "TopLeft" may indicate a top left feature point of a lower lip outline.

The element "TopRight" may indicate a top right feature point of the lower lip outline.

The element "BottomLeft" may indicate a bottom left feature point of the lower lip outline.

The element "BottomRight" may indicate a bottom right feature point of the lower lip outline.

The element "Top" may indicate a top feature point of the lower lip outline.

FIG. 43 illustrates a face point set type (FacePointSetType) 3910 according to an embodiment.

Referring to FIG. 43, the face point set type 3910 may include elements. The elements of the face point set type 3910 may include "TopLeft", "TopRight", "BottomLeft", "BottomRight", and "Bottom".

Source 9 shows a program source of the face point set type 3910 using XML. However, Source 9 is only an example and thus, embodiments are not limited thereto.

[Source 9]

```
<complexType name="FacePointSetType">

    <sequence>

        <element name="TopLeft" type="Point" minOccurs="0"/>

        <element name="TopRight" type="Point" minOccurs="0"/>
```

EP 2 447 908 A2

```
<element name="BottomLeft" type="Point" minOccurs="0"/>
    <element name="BottomRight" type="Point" minOccurs="0"/>
    <element name="Bottom" type="Point" minOccurs="0"/>
  </sequence>
</complexType>
```

The element "TopLeft" may indicate a feature point that is positioned next to left of a left feature point of nose type 1.
The element "TopRight" may indicate a feature point that is positioned next to right of a right feature point of nose type 1.
The element "BottomLeft" may indicate a feature point that is positioned next to left of the left feature point of mouth lip type 1.
The element "BottomRight" may indicate a feature point that is positioned next to right of the right feature point of mouth lip type 1.
The element "Bottom" may indicate a feature point that is positioned between a bottom feature point of the mouth lip type and the bottom feature point of head type 1.
The above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.
Although embodiments have been shown and described, it would be appreciated by those skilled in the art that changes may be made in these embodiments without departing from the principles and spirit of the disclosure, the scope of which is defined by the claims and their equivalents.

**Claims**

1. A display device comprising:

   a storage unit to store an animation clip, animation control information, and control control information, the animation control information including information indicating a part of an avatar the animation clip corresponds to and a priority, and the control control information including information indicating a part of an avatar motion data corresponds to and a priority, and the motion data being generated by processing a value received from a motion sensor; and
   a processing unit to compare a priority of animation control information corresponding to a first part of the avatar with a priority of control control information corresponding to the first part of the avatar, and to determine data to be applicable to the first part of the avatar.

2. The display device of claim 1, wherein the processing unit compares the priority of the animation control information corresponding to each part of the avatar with the priority of the control control information corresponding to each part of the avatar, to determine data to be applicable to each part of the avatar, and associates the determined data to generate a motion picture of the avatar.

3. The display device of claim 1, wherein:

   information associated with a part of an avatar that each of the animation clip and the motion data corresponds to is information indicating that each of the animation clip and the motion data corresponds to one of a facial

21

expression, a head, an upper body, a middle body, and a lower body of the avatar.

4. The display device of claim 1, wherein the animation control information further comprises information associated with a speed of an animation of the avatar.

5. The display device of claim 1, wherein:

the storage unit further stores information associated with a connection axis of the animation clip, and
the processing unit associates the animation clip with the motion data based on information associated with the connection axis of the animation clip.

6. The display device of claim 5, wherein the processing unit extracts information associated with a connection axis from the motion data, and associates the animation clip and the motion data by enabling the connection axis of the animation clip to correspond to the connection axis of the motion data.

7. The display device of claim 1, further comprising:

a generator to generate a facial expression of the avatar,
wherein the storage unit stores data associated with a feature point of a face of a user of a real world that is received from the motion sensor, and
the generator generates the facial expression based on the data.

8. The display device of claim 7, wherein the data comprises information associated with at least one of a color, a position, a depth, an angle, and a refractive index of the face.

9. A non-transitory computer-readable recording medium storing a program implemented in a computer system comprising a processor and a memory, the non-transitory computer-readable recording medium comprising:

a first set of instructions to store animation control information and control control information; and
a second set of instructions to associate an animation clip and motion data generated from a value received from a motion sensor, based on the animation control information corresponding to each part of an avatar and the control control information,
wherein the animation control information comprises information associated with a corresponding animation clip, and an identifier indicating the corresponding animation clip corresponds to one of a facial expression, a head, an upper body, a middle body, and a lower body of an avatar, and
the control control information comprises an identifier indicating real-time motion data corresponds to one of the facial expression, the head, the upper body, the middle body, and the lower body of an avatar.

10. The non-transitory computer-readable recording medium of claim 9, wherein:

the animation control information further comprises a priority, and
the control control information further comprises a priority.

11. The non-transitory computer-readable recording medium of claim 10, wherein the second set of instructions compares a priority of animation control information corresponding to a first part of the avatar with a priority of control control information corresponding to the first part of the avatar, to determine data to be applicable to the first part of the avatar.

12. The non-transitory computer-readable recording medium of claim 9, wherein the animation control information further comprises information associated with a speed of an animation of the avatar.

13. The non-transitory computer-readable recording medium of claim 9, wherein the second set of instructions extracts information associated with a connection axis from the motion data, and associates the animation clip and the motion data by enabling the connection axis of the animation clip to correspond to the connection axis of the motion data.

# FIG. 1

Enriched content

VV Virtual object data representation

Digital Content Provider — VV CI — Adaptation VV — VWI — Adaptation VV — VV CI — Virtual world N

RV Virtual object data representation

RV CI — VR CI

Adaptation RV/VR

VWI — SI

Adaptation RV — Adaptation VR

RV Real world data representation

Sensor — RV CI — VR CI — Actuator

Device Commands

VR Virtual object data representation

VR Real world data representation

Real world device 1 — Real world device 2 — Real world device 3

RV CI — VR CI

Adaptation RV/VR

VWI — SI

Adaptation RV — Adaptation VR

RV CI — VR CI

Sensor — Actuator

Real world device N

User Interaction

EP 2 447 908 A2

**FIG. 2**

FIG. 3

EP 2 447 908 A2

# FIG. 4

```
<schema xmlns="http://www.w3.org/2001/XMLSchema"
xmlns:accmd="urn:mpeg:mpegS:2010:01-accmd-NS"
xmlns:sev="urn:mpeg:mpeg-v:2010:01-SEV-NS"
xmlns:mpeg7="urn:mpeg:mpeg7:schema:2004"
targetNamespace="urn:mpeg:mpegS:2010:01-accmd-NS"
elementFormDefault="qualified" attributeFormDefault="unqualified"
version="ISO/IEC 23005-x" id="MPEG-V-accmd.xsd">
    <import namespace="urn:mpeg:mpeg-v:2010:01-SEV-NS"
schemaLocation="MPEG-V-SEV.xsd"/>
    <import namespace="http://www.w3.org/2001/XMLSchema"
schemaLocation="AvatarCharacteristics.xsd"/>
    <import namespace="urn:mpeg:mpeg7:schema:2004"
schemaLocation="http://standards.iso.org/ittf/PubliclyAvailableStandards/
MPEG-7_schema_files/mpeg7-v2.xsd"/>
    <!-- ######################################################## -->
    <!-- Definition of AvatarCtrlCmd Base Attributes        -->      ⌇315
    <!-- ######################################################## -->
    <attributeGroup name="AvatarCtrlCmdBaseAttributes">
        <attribute name="idref" type="IDREF" use="optional"/>
        <attribute name="activate" type="boolean" use="optional"/>      ⌇316
        <attribute name="value" type="integer" use="optional"/>      ⌇317
    </attributeGroup>
    <!-- ######################################################## -->
    <!-- Definition of AvatarControlCmd Base Elements        -->      ⌇318
    <!-- ######################################################## -->
    <element name="AvatarControlCommand"
type="accmd:AvatarControlCommandBaseType"/>
    <!-- ######################################################## -->
    <!-- Definition of AvatarControlCmd Base Type        -->      ⌇319
    <!-- ######################################################## -->
    <complexType name="AvatarCtrlCmdBaseType" abstract="true">
        <complexContent>
            <restriction base="anyType">
                <attribute name="id" type="ID" use="optional"/>
            </restriction>
        </complexContent>
    </complexType>
    <!-- ######################################################## -->
    <!-- Definition of the AvatarControlCmd root element        -->      ⌇320
    <!-- ######################################################## -->
    <element name="AvatarCtrlCmd">
        <complexType>
            <sequence>
                <element ref="accmd:AvatarControlCommand"/>
            </sequence>
            <anyAttribute namespace="##other" processContents="lax"/>
```

## FIG. 5

```
        </complexType>
    </element>
    <!-- ############################################### -->
    <!-- Definition of AvatarControl Command Base Type  -->          321
    <!-- ############################################### -->
    <complexType name="AvatarControlCommandBaseType"abstract="true">
        <complexContent>
            <extension base="accmd:AvatarCtrlCmdBaseType">
                <attributeGroup
ref="accmd:AvatarCtrlCmdBaseAttributes"/>
                <anyAttribute namespace="##other" processContents="lax"/>
    </extension>
            </extension>
        </complexContent>
    </complexType>
    <!-- ############################################### -->
    <!--  Definition of AvatarControlCmd Appearance Type  -->          322
    <!-- ############################################### -->
    <complexType name="AppearanceControlType">          323
        <complexContent>
            <extension base="accmd:AvatarControlCommandBaseType">
                <choice>
                    <element name="Body" type="accmd:BodyType"/>
                    <element name="Head" type="accmd:HeadType"/>
                    <element name="Eyes" type="accmd:EyesType"/>
                    <element name="Nose" type="accmd:NoseType"/>
                    <element name="MouthLip" type="accmd:MouthLipType"/>
                    <element name="Skin" type="accmd:SkinType"/>
                    <element name="Facial" type="accmd:FacialType"/>
                    <element name="Nail" type="accmd:NailType"/>
                    <element name="Hair" type="accmd:HairType"/>
                    <element name="EyeBrows" type="accmd:EyeBrowsType"/>
                    <element name="FacialHair" type="accmd:FacialHairType"/>
                    <element name="AppearanceResources"
type="accmd:AppearanceResourcesType"/>
                    <element name="PhysicalCondition"
type="accmd:PhysicalConditionType"/>
                    <element name="Clothes" type="accmd:ClothesType"/>
                    <element name="Shoes" type="accmd:ShoesType"/>
                    <element name="Accessories" type="accmd:AccessoriesType"/>
                </choice>
            </extension>
        </complexContent>
    </complexType>
    <complexType name="AnimationControlType">          324
        <complexContent>
```

## FIG. 6

```
<extension base="accmd:AvatarControlCommandBaseType">
    <choice>
        <element name="Idle" type="accmd:IdleType"/>
        <element name="Greeting" type="accmd:GreetingType"/>
        <element name="Dance" type="accmd:DanceType"/>
        <element name="Walk" type="accmd:WalkType"/>
        <element name="Moves" type="accmd:MovesType"/>
        <element name="Fighting" type="accmd:FightingType"/>
        <element name="Hearing" type="accmd:HearingType"/>
        <element name="Smoke" type="accmd:SmokeType"/>
        <element name="Congratulations"
type="accmd:CongratulationsType"/>
        <element name="Common_Actions"
type="accmd:CommonActionsType"/>
        <element name="Specific_Actions"
type="accmd:SpecificActionType"/>
        <element name="Facial_Expression"
type="accmd:FacialExpressionType"/>
        <element name="Body_Expression"
type="accmd:BodyExpressionType"/>
        <element name="AnimationResources"
type="accmd:AnimationResourceType"/>
    </choice>
    <attribute name="MotionPriority"
type="nonNegativeInteger" use="optional"/>
        <attribute name="speed" type="accmd:SpeedType" use="optional"/>
    </extension>
</complexContent>
</complexType>
<simpleType name="SpeedType">
    <restriction base="string">
        <enumeration value="slow"/>
        <enumeration value="normal"/>
        <enumeration value="fast"/>
    </restriction>
</simpleType>
<complexType name="CommunicationSkillsControlType">        ~~~ 325
    <complexContent>
        <extension base="accmd:AvatarControlCommandBaseType">
            <choice>
                <element name="InputVerbalCommunication"
type="InputVerbalCommunicationType"/>
                <element name="InputNonVerbalCommmunication"
type="InputNonVerbalCommmunicationType"/>
                <element name="OutputVerbalCommunication"
type="OutputVerbalCommunicationType"/>
```

## FIG. 7

```
        <element name="OutputNonVerbalCommaunication"
type="OutputNonVerbalCommaunicationType"/>
        </choice>
      </extension>
    </complexContent>
  </complexType>
  <complexType name="PersonalityControlType">    ～326
    <complexContent>
      <extension base="accmd:AvatarControlCommandBaseType">
        <choice>
          <element name="Oppenes" type="OppenesType"/>
          <element name="Agreableness" type="AgreablenessType"/>
          <element name="Neuroticism" type="NeuroticismType"/>
          <element name="Extraversion" type="ExtraversionType"/>
          <element name="Conscientiousness"
type="ConscientiousnessType"/>
        </choice>
      </extension>
    </complexContent>
  </complexType>
  <complexType name="ControlControlType">    ～327
    <complexContent>
      <extension base="accmd:AvatarControlCommandBaseType">
        <choice>
          <element name="BodyFeaturesControl"
type="accmd:BodyFeaturesControlType"/>
          <element name="FaceFeaturesControl"
type="accmd:FaceFeaturesControlType"/>
        </choice>
        <attribute name="MotionPriority"
type="nonNegativeInteger" use="optional"/>
        <attribute name="frametime" type="second" use="required"/>
        <attribute name="NumOfFrame"
type="NonNegativeInteger" use="optional"/>
        <attribute name="frameID"
type="NonNegativeInteger" use="required"/>
      </extension>
    </complexContent>
  </complexType>
</schema>
```

## FIG. 8

accmd:AvatarControlCommandBaseType

attributes
- id
- idref
- activate
- value
- any ##other

420

410

Appearance ControlType

- accmd:Body
- accmd:Head
- accmd:Eyes
- accmd:Nose
- accmd:MouthLip
- accmd:Skin
- accmd:Facial
- accmd:Nail
- accmd:Hair
- accmd:EveBrows
- accmd:FacialHair
- accmd:AppearanceResou...
- accmd:PhysicalCondition
- accmd:Clothes
- accmd:Shoes
- accmd:Accessories

# FIG. 9

accmd:AvatarControlCommandBaseType

attributes

id

idref

activate

value

any ##other

~520

510

Communication
SkillsContr...

accmd:InputVerbalComm...

accmd:InputNonVerbalCo...

accmd:OutputVerbalCom...

accmd:OutputNonVerbalC...

# FIG. 10

accmd:AvatarControlCommandBaseType

☐ attributes

id

idref

activate

value

any ##other

620

610

Personality
ControlType

accmd:Openness

accmd:Agreeableness

accmd:Neuroticism

accmd:Extraversion

accmd:Conscientiousness

## FIG. 11

accmd:AvatarControlCommandBaseType

attributes

id

idref

activate

value

any ##other

720

710

Animation
ControlType

attributes 730

MotionPriority 731

speed 732

accmd:Idle

accmd:Greeting

accmd:Dance

accmd:Walk

accmd:Moves

accmd:Fighting

accmd:Hearing

accmd:Smoke

accmd:Congratulations

accmd:Common_Actions

accmd:Specific_Actions

accmd:Facial_Expression

accmd:Body_Expression

accmd:AnimatinResources

**FIG. 12**

EP 2 447 908 A2

# FIG. 13

DISPLAY DEVICE 900

STORAGE UNIT

PROCESSING UNIT

910

920

**FIG. 14**

<u>1000</u>

1020

1010

1030

1040

1050

# FIG. 15

1110

| 1110 | 1120 | 1130 |
|---|---|---|
| Animation clip | Corresponding part | Priority |
| facial expression 1121 | | 5 |
| head 1122 | | 2 |
| upper body 1123 | | 5 |
| middle body 1124 | | 1 |
| lower body 1125 | | 1 |

# FIG. 16

1200

| Animation clip 1210 | | Corresponding part 1220 | Priority 1230 |
|---|---|---|---|
| 1211 | | facial expression 1221 | 1 |
| 1212 | | head 1222 | 5 |
| 1213 | | upper body 1223 | 2 |
| 1214 | | middle body 1224 | 5 |
| 1215 | | lower body 1225 | 5 |

## FIG. 17

| Animation clip | Corresponding part | Priority |
|---|---|---|
| 1321 | facial expression | 5 |
| 1322 | head | 2 |
| 1323 | upper body | 5 |
| 1324 | middle body | 1 |
| 1325 | lower body | 1 |

1320

1310

1311
1312
1313
1314
1315

| Animation clip | Corresponding part | Priority |
|---|---|---|
| 1331 | facial expression | 1 |
| 1332 | head | 5 |
| 1333 | upper body | 2 |
| 1334 | middle body | 5 |
| 1335 | lower body | 5 |

1330

EP 2 447 908 A2

## FIG. 18

START

VERIFY INFORMATION INCLUDED IN MOTION OBJECT DATA — S1410

IS PRIORITY OF NEW MOTION OBJECT DATA HIGHER THAN PRIORITY OF EXITING MOTION OBJECT DATA? S1420

YES

NO

DETERMINE, AS NEW MOTION OBJECT DATA, DATA APPLICABLE IN FIRST PART OF AVATAR — S1430

IS ALL OF MOTION OBJECT DATA VERIFIED? S1440

NO

YES

GENERATE MOVING PICTURE OF AVATAR — S1450

END

## FIG. 19

START

↓

FIND PART OF AVATAR INCLUDING ROOT ELEMENT — S1510

↓

EXTRACT INFORMATION ASSOCIATED WITH CONNECTION AXIS FROM MOTION OBJECT DATA — S1520

↓

DOES MOTION OBJECT DATA NOT BEING ASSOCIATED EXIST? — S1530

NO → END

YES ↓

CHANGE, TO RELATIVE DIRECTION ANGLE, JOINT DIRECTION ANGLE INCLUDED IN INFORMATION ASSOCIATED WITH CONNECTION AXIS — S1540

↓

ASSOCIATE CORRESPONDING MOTION OBJECT DATA WITH EACH PART OF AVATAR — S1550

**FIG. 20**

**FIG. 21**

**FIG. 22**

# FIG. 23

**FIG. 24**

**FIG. 25**

**FIG. 26**

**FIG. 27**

**FIG. 28**

**FIG. 29**

**FIG. 30**

**FIG. 31**

**FIG. 32**

**FIG. 33**

## FIG. 34

**FIG. 35**

FIG. 36

# FIG. 37

| Outline |
|---------|

3310

| Left | |
|------|------|
| Type | Point |

| Right | |
|-------|------|
| Type | Point |

| Top | |
|-----|------|
| Type | Point |

| Bottom | |
|--------|------|
| Type | Point |

## FIG. 38

3410

HeadOutline2Type

- ac : BottomLeft_1
- ac : BottomLeft_2
- ac : BottomRight_1
- ac : BottomRight_2

## FIG. 39

3510

EyeOutline2Type

- ac : TopLeft
- ac : BottomLeft
- ac : TopRight
- ac : BottomRight

## FIG. 40

3610

NoseOutline2Type

- ac : TopLeft
- ac : TopRight
- ac : Center
- ac : LowerBottom

## FIG. 41

3710

UpperLipOutline2Type

ac : TopLeft

ac : TopRight

ac : BottomLeft

ac : BottomRight

ac : Bottom

## FIG. 42

3810

LowerLipOutline2Type

ac : TopLeft

ac : TopRight

ac : BottomLeft

ac : BottomRight

ac : Top

## FIG. 43

3910

FacePointSetType

ac : TopLeft

ac : TopRight

ac : BottomLeft

ac : BottomRight

ac : Bottom